# EUROPÄISCHE PATENTSCHRIFT

(11) **EP 3 328 205 B1**
(45) Veröffentlichungstag und Bekanntmachung des Hinweises auf die Patenterteilung: **08.12.2021**
(21) Anmeldenummer: 15747441.2
(22) Anmeldetag: 31.07.2015
(51) Int. Cl.: A22B 3/08, A22B 3/00

(54) **VORRICHTUNG, ANORDNUNG UND VERFAHREN ZUM BETÄUBEN VON GEFLÜGELTIEREN**
DEVICE, ASSEMBLY, AND METHOD FOR STUNNING POULTRY
DISPOSITIF, AGENCEMENT ET PROCÉDÉ POUR ÉTOURDIR DES VOLAILLES

(43) Veröffentlichungstag der Anmeldung: 06.06.2018
(73) Patentinhaber: Linco Food Systems A/S, 8380 Trige (DK)
(72) Erfinder: THRANE, Uffe, 8450 Hammel (DK); KJELDSEN, Poul, 8400 Ebeltoft (DK)
(74) Vertreter: Stork Bamberger Patentanwälte PartmbB
(86) Internationale Anmeldenummer: PCT/EP2015/067665
(87) Internationale Veröffentlichungsnummer: WO 2017/020931

(56) Entgegenhaltungen:
- EP-A1- 1 405 564
- EP-A2- 1 616 482
- WO-A1-2008/127667
- NL-A- 9 201 430
- None

## Beschreibung

Die Erfindung betrifft eine Vorrichtung, ausgebildet und eingerichtet zum Betäuben von zum Schlachten vorgesehenen und in Behältern befindlichen, lebenden Geflügeltieren mittels eines ein Betäubungsgas beinhaltenden Gasgemisches, umfassend eine Betäubungskammer mit mindestens zwei Betäubungszonen, eine eingangsseitig an der Betäubungskammer angeordnete Eingabestation für jeden lebende Geflügeltiere beinhaltenden Behälter und eine ausgangsseitig an der Betäubungskammer angeordnete Ausgabestation für den oder jeden betäubte Geflügeltiere beinhaltenden Behälter, mindestens einen Transportförderer zum Transportieren jedes Behälters von der Eingabestation zur Ausgabestation in Transportrichtung T durch die Betäubungszonen, sowie Mittel zum Zuführen des Gasgemisches in die Betäubungszonen der Betäubungskammer.

Die Erfindung betrifft weiterhin eine Anordnung zum Betäuben von zum Schlachten vorgesehenen und in Behältern befindlichen, lebenden Geflügeltieren mittels eines ein Betäubungsgas umfassenden Gasgemisches, umfassend eine Vorrichtung zum Betäuben von zum Schlachten vorgesehenen und in Behältern befindlichen, lebenden Geflügeltieren mittels eines ein Betäubungsgas umfassenden Gasgemisches sowie mindestens zwei Behälter zum Transportieren der Geflügeltiere durch die Vorrichtung.

Des Weiteren betrifft die Erfindung ein Verfahren zum Betäuben von zum Schlachten vorgesehenen und in Behältern befindlichen, lebenden Geflügeltieren mittels eines ein Betäubungsgas beinhaltenden Gasgemisches, umfassend die Schritte: Zuführen von lebende Geflügeltiere beinhaltenden Behältern mittels einer Eingabestation in eine Betäubungskammer, Transportieren jedes Behälters durch mindestens zwei Betäubungszonen der Betäubungskammer mittels mindestens eines Transportförderers, und Ausgeben jedes betäubte Geflügeltiere beinhaltenden Behälters mittels einer Ausgabestation aus der Betäubungskammer, wobei die in jedem Behälter befindlichen Geflügeltiere in den Betäubungszonen der Betäubungskammer mit dem Gasgemisch beaufschlagt werden.

Solche Vorrichtungen, Anordnungen und Verfahren kommen in der Geflügel verarbeitenden Industrie zum Einsatz, um das Geflügel vor dem Schlachten zu betäuben. Mit dem Betäuben ist sowohl das Beruhigen (die so genannte "Einschlafphase") der Geflügeltiere bis zur tiefen aber umkehrbaren Bewusstlosigkeit (Controlled Atmosphere Stunning = CAS) als auch das Betäuben bis zur unumkehrbaren Bewusstlosigkeit, also dem Hirntod (Controlled Atmosphere Killing = CAK), gemeint. Der Grad der Bewusstlosigkeit hängt von der Konzentration des Betäubungsgases in dem Gasgemisch und/oder der Dauer der Beaufschlagung mit dem Gasgemisch ab, weshalb das Betäuben in mehreren Phasen unterschiedlicher und insbesondere zunehmender Konzentration des Betäubungsgases im Gasgemisch erfolgt. Vor dem Schlachten der Geflügeltiere müssen diese in einen Zustand von tiefer Bewusstlosigkeit - nach einzelnen Richtlinien zum Tierschutz - bis zum Hirntod gebracht werden. Allerdings muss die Zeitspanne zwischen der Bewusstlosigkeit, insbesondere wenn der Hirntod eingetreten ist, und dem Schlachten bzw. dem Kehl-oder Köpfschnitt möglichst gering gehalten werden, damit das Herz beim Schlachten noch eine Restfunktion hat, um den Ausblutungsprozess nach dem Kehl- oder Köpfschnitt zu unterstützen.

Das Betäuben der Geflügeltiere, insbesondere Masthähnchen, aber auch Enten, Gänsen, Truthähnen oder dergleichen, erfolgt in mehreren Stufen, um den relevanten Richtlinien zum Tierschutz gerecht zu werden. Zum stufenweisen Betäuben weisen die Vorrichtungen mindestens zwei Betäubungszonen auf, in denen die Geflügeltiere Gasgemischen mit unterschiedlichen Konzentrationen des Betäubungsgases ausgesetzt sind. Als Betäubungsgas ist rein beispielhaft CO₂ genannt. Andere zugelassene Betäubungsgase als Bestandteil des Gasgemisches sind aber ebenfalls einsetzbar. Gemäß einer EU-Richtlinie 1099/2009 müssen die Geflügeltiere, bevor sie einer Gaskonzentration von mehr als 40% Betäubungsgasanteil im Gasgemisch ausgesetzt werden, vollständig bewusstlos sein. Erst wenn die Geflügeltiere sicher und vollständig bewusstlos sind, erfolgt eine Beaufschlagung mit einem Gasgemisch, das einen Anteil von mehr als 40% Betäubungsgas im Gasgemisch aufweist und zu einer tiefen und langanhaltenden Bewusstlosigkeit (man spricht dann von "stunned") bis zum Hirntod (man spricht dann von "killed") der Geflügeltiere führen kann.

Es sind eine Vielzahl von Vorrichtungen, Anordnungen und Verfahren bekannt, bei denen die Geflügeltiere vereinzelt, z.B. auf einem Transportförderer oder mittels eines Hängeförderers, durch Betäubungskammern hindurch transportiert werden. Die WO 94/15469 beschreibt eine solche Lösung in einem der Ausführungsbeispiele. Solche Systeme sind jedoch in ihrer Leistungsfähigkeit begrenzt. Des Weiteren erfordern solche Systeme bezogen auf die Anzahl der zu betäubenden Geflügeltiere einen erheblichen Platzbedarf. Entsprechende Nachteile weisen auch Systeme auf, bei denen einzelne Behälter, die jeweils mehrere Geflügeltiere beinhalten, durch eine Betäubungskammer transportiert werden. Die EP 1 405 564 A1 aus dem Hause der Anmelderin beschreibt ein solches System, bei dem Geflügeltiere enthaltende Behälter durch eine Betäubungskammer transportiert werden. Bei dieser Lösung werden die Behälter vereinzelt, also Behälter für Behälter, nach dem Eintritt in die Betäubungskammer abwärts in Richtung einer steigenden Konzentration des Betäubungsgases im Gasgemisch transportiert. Zum Ausgeben der Behälter werden diese wieder auf das Niveau der Zuführung angehoben und aus der Betäubungskammer transportiert. Das Variieren der Konzentration des Betäubungsgases im Gasgemisch, insbesondere aufgrund der Abhängigkeit von der Schwerkraft, ist zeitaufwendig und nur bedingt präzise, weshalb das gleichmäßige und effiziente Betäuben der in einem Behälter befindlichen Geflügeltiere erschwert wird. Zur Verbesserung der Effizient solcher Systeme sind Lösungen bekannt, bei denen mehrere übereinander angeordnete Behälter als Stapel der Betäubungskammer zugeführt und als Stapel wieder aus dieser ausgegeben werden. Die WO 94/15469 beschreibt in einer weiteren Ausführungsform ein solches System.

Die NL 9 201 430 A befasst sich mit einer Vorrichtung zum Betäuben von Geflügel, wobei das in Transportboxen transportierte Geflügel durch einen Transporttunnel geführt wird, dem ein Gasgemisch zugeführt wird.

Die WO 2008/127667 A1 beschreibt eine Betäubungskammer für in Transportboxen befindliches Geflügel, wobei die Betäubungskammer einen zentralen Zugang für das Betäubungsgas aufweist.

Die bekannten Vorrichtungen, Anordnungen und Verfahren weisen jedoch alle den gemeinsamen Nachteil auf, dass die Geflügeltiere ungleichmäßig mit dem Betäubungsgas beaufschlagt werden. Dies betrifft insbesondere solche Lösungen, bei denen die Geflügeltiere in einem Behälter durch die Betäubungskammer transportiert werden. Das Gasgemisch in den einzelnen Betäubungszonen wirkt dabei von außen auf die Geflügeltiere, so dass die Geflügeltiere innerhalb eines Behälters unterschiedlich stark und intensiv mit dem Gasgemisch beaufschlagt werden. So sind solche Geflügeltiere, die in der Mitte des Behälters stehen, durch die umstehenden Geflügeltiere zumindest teilweise durch diese abgeschirmt und nur unzureichend mit dem Gasgemisch versorgt. Besonders ungleichmäßig ist die Beaufschlagung mit dem Gasgemisch von Geflügeltieren, die in mehreren übereinander gestapelten Behältern in die Betäubungskammer eingeführt, durch die Betäubungskammer transportiert und aus der Betäubungskammer ausgegeben werden. Diejenigen Behälter eines Stapels, die nach dem Ausgeben des Stapels aus der Betäubungskammer zuerst vom Gasgemisch befreit und dann entleert werden, indem die betäubten Geflügeltiere zum Ausbluten aus dem Behälter genommen und z.B. an einen Hängeförderer gehängt werden, sind signifikant kürzer dem Gasgemisch ausgesetzt als die Geflügeltiere in den Behältern des Stapels, die erst anschließend vom Gasgemisch befreit und entleert werden. Die unterschiedlichen Verweildauern der Geflügeltiere in einer mit Gasgemisch angereicherten Umgebung führen zu einem unkontrollierten Betäuben. Für den Fall, dass sämtliche Behälter nach dem Betäuben gleichzeitig vom Gasgemisch befreit werden, bevor der Behälterstapel die Betäubungskammer verlässt, erfolgt dennoch eine Ungleichbehandlung der Geflügeltiere, indem für die Geflügeltiere aus dem zuerst entleerten Behälter eines Behälterstapels nur eine sehr kurze Zeitspanne zwischen dem Betäuben und dem Ausbluten vergeht, während diese Zeitspanne für die Geflügeltiere des zuletzt entleerten Behälters des Behälterstapels deutlich länger ist. Mit anderen Worten variiert nicht nur die Dauer der Beaufschlagung mit dem Gasgemisch, sondern auch die Zeitspanne zwischen dem Ende des Betäubens und dem Ausbluten, was dazu führt, dass bei einigen Geflügeltieren, die länger dem Gasgemisch ausgesetzt sind oder länger in ihrem betäubten Zustand bzw. in dem Zustand des Hirntods verharren, bis sie zum Ausbluten geschlachtet werden, auch die Restfunktion des Herzens nicht mehr gegeben ist, wodurch das Ausbluten nach dem Schlacht- bzw. Köpfschnitt erschwert ist.

Der Erfindung liegt somit die Aufgabe zugrunde, eine einfache und kompakte Vorrichtung vorzuschlagen, die eine einheitliche und zuverlässige Betäubung aller Geflügeltiere sicherstellt sowie einen schnellen und einheitlichen Übergang aller Geflügeltiere vom Betäuben zum Ausbluten unterstützt. Die Aufgabe besteht weiterhin darin, eine entsprechende Anordnung und ein entsprechendes Verfahren vorzuschlagen.

Diese Aufgabe wird durch eine Vorrichtung mit den eingangs genannten Merkmalen dadurch gelöst, dass das Mittel zum Zuführen des Gasgemisches mindestens ein Injektionsrohr umfasst, das zum lösbaren Verbinden mit dem oder jedem Behälter und zum Lösen von diesem relativ zum Behälter bewegbar ausgebildet und eingerichtet ist, derart, dass jeder Behälter im Zustand der lösbaren Verbindung mit dem oder jedem Injektionsrohr mit dem Gasgemisch befüllbar ist, wobei dass jedes Injektionsrohr zum Bewegen in das Innere jedes einen Behälterstapel bildenden Behälters und zum Bewegen aus dem oder jedem Behälter ausgebildet und eingerichtet ist, derart, dass jeder Behälter des Behälterstapels mit den darin befindlichen Geflügeltieren individuell und von innen gerichtet mit dem aus dem oder jedem Injektionsrohr strömenden Gasgemisch befüllbar ist, wobei das oder jedes Injektionsrohr oberhalb der Transportstrecke angeordnet und vertikal auf und ab bewegbar ausgebildet, derart, dass das Injektionsrohr aus einer oberen Warteposition, in der das Injektionsrohr mit seinem freien Ende vollständig außerhalb des dem Injektionsrohr am nächsten liegenden Behälters eines unter dem Injektionsrohr stehenden Behälterstapels positioniert ist, in eine untere Arbeitsposition, in der das Injektionsrohr mit seinem freien Ende innerhalb eines beliebigen Behälters des Behälterstapels positioniert ist, und zurück bewegbar ist. Unter Injektionsrohr wird nicht nur ein starres Rohr verstanden, sondern auch flexible Leitungselemente, die zum Zuführen des Gasgemisches geeignet sind. Mit lösbarer Verbindung ist z.B. das Ankoppeln der Injektionsleitung an den Behälter beschrieben, so dass das aus dem Injektionsrohr ausströmende Gasgemisch in den Innenraum des Behälters geleitet wird, weshalb der Behälter einen entsprechenden Zugang aufweisen muss. Mit der lösbaren Verbindung sind alle Adaptionen des Injektionsrohres an den Behälter beschrieben, die ein Einleiten des Gasgemisches direkt in den Innenraum des Behälters gewährleisten. Als Betäubungskammer sind im weitesten Sinne alle offenen oder geschlossenen Rahmen, Gehäuse, Wannen, Tunnel oder dergleichen bezeichnet. Durch das oder jedes Injektionsrohr ist die Möglichkeit geschaffen, die Behälter individuell von Innen mit dem Gasgemisch zu versorgen. Dadurch, dass das Gasgemisch innen in die Behälter einbringbar ist, so dass sich eine Gasgemischverteilung von innen nach außen ergibt, können alle Geflügeltiere innerhalb eines Behälters in gleichmäßiger Weise betäubt werden. Des Weiteren kann die Gaskonzentration des Betäubungsgases in dem Gasgemisch in jeder Betäubungszone schnell und einfach geändert und durch den Einsatz der Injektionsrohre unmittelbar in die Behälter und insbesondere auch unabhängig von der Position des Behälters in einem Behälterstapel übertragen werden. Durch die erfindungsgemäße Ausbildung ist eine Vorrichtung geschaffen, mittels der jeder Behälter einzeln und individuell mit dem Gasgemisch befüllt werden kann, so dass auf diese Weise sichergestellt wird, dass alle Geflügeltiere in einem Behälter und insbesondere auch alle Geflügeltiere in einem aus zwei oder mehr Behältern gebildeten Stapel mit derselben Konzentration des Betäubungsgases in dem Gasgemisch in jeder der Betäubungszonen und über exakt dieselbe Zeitdauer von der Eingabe im Bereich der Eingabestation in die Betäubungskammer bis zum Ausgeben im Bereich der Ausgabestation zur Übergabe an den Schlachtvorgang mit dem Gasgemisch beaufschlagt werden können. Wenn von Stapel die Rede ist, ist im Sinne der Erfindung ausdrücklich auch ein einzelner Behälter gemeint. Ein Stapel kann demnach aus einem einzelnen Behälter oder aus mehreren übereinander angeordneten Behältern gebildet sein. Jeder Stapel ist nach unten durch die Bodenwand des an unterster Position des Stapels liegenden Behälters geschlossen. Nach oben ist jeder Stapel wahlweise durch die Bodenwand des darüber liegenden Behälters oder durch einen Deckel auf dem an oberster Position des Stapels liegenden Behälter geschlossen, so dass einzelnen Behälter oder mehrere übereinander gestapelte Behälter jeweils eine Art "geschlossenes System" bilden. "Geschlossen" deshalb, da das Gasgemisch mit dem Betäubungsgas schwerer ist als die Umgebungsluft innerhalb der Behälter und entsprechend in Richtung Boden des Behälters sinkt und dadurch das Gasgemisch grundsätzlich innerhalb des jeweiligen Behälters verbleibt. Eine Vermischung von Gasgemischen zwischen den Betäubungszonen, in denen üblicherweise Gasgemische unterschiedlicher Konzentrationen von Betäubungsgas eingesetzt werden, wird dadurch verhindert. Das schließt aber nicht aus, dass Behälter auch mindestens teilweise geöffnet sein können. Selbst wenn die Behälter z.B. im Bereich der Seitenwände, Öffnungen z.B. durch Belüftungsöffnungen oder eine Gitterstruktur aufweisen, werden diese Öffnungen durch die engstehenden Geflügeltiere "geschlossen". Durch die Möglichkeit der Einzelbefüllung der Behälter mit dem Gasgemisch ist auch die Grundlage für das First-in-First-out-Prinzip gelegt, derart, dass die zuerst mit dem Gasgemisch gefüllten Behälter auch als erstes wieder ausgegeben werden, um die dann betäubten Geflügeltiere in eine hängende Position zum Zuführen und Ausführen des Kehl- oder Köpfschnittes zu bringen, durch den die Geflügeltiere ausbluten. Das FiFo-Prinzip bezieht sich demnach nicht auf die Reihenfolge der Eingabe der Behälter bzw. Behälterstapel in die Betäubungskammer, sondern auf die Reihenfolge der Befüllung der Behälter bzw. Behälterstapel mit dem Gasgemisch. Die erfindungsgemäße Vorrichtung stellt demnach sicher, dass die Zeitspanne zwischen dem Betäuben und dem Ausbluten optimiert, nämlich maximal verkürzt werden kann und für alle Geflügeltiere, insbesondere auch für die in einem aus mehreren Behältern gebildeten Behälterstapel, nahezu identisch ist. Mit der erfindungsgemäßen Ausführungsform lassen sich die Behälterstapel besonders einfach von oben nach unten oder umgekehrt nacheinander mit dem Gasgemisch befüllen. Während ein Behälterstapel unterhalb des Injektionsrohrs stationär positioniert ist, kann die stufenweise Befüllung der Behälter eines Behälterstapels erfolgen. Letztlich muss das oder jedes Injektionsrohr nur stufenweise abgesenkt oder angehoben werden, um nach und nach alle Ebenen eines Behälterstapels mit dem Gasgemisch zu versorgen. Dazu kann das Injektionsrohr derart bündig mit dem Behälter verbunden, gekoppelt oder anderweitig adaptiert sein, dass das aus dem Injektionsrohr strömende Gasgemisch zwangsweise in den Behälter geführt wird. Vorzugsweise ragt das Injektionsrohr jedoch in den zu befüllenden Behälter hinein. Jeder Behälter eines Behälterstapels innerhalb einer Betäubungszone ist dabei mit exakt dem gleichen Gasgemisch über exakt denselben Zeitraum befüllbar, so dass alle Geflügeltiere unabhängig davon, in welcher Position sie innerhalb eines Behälters stehen und unabhängig davon, in welcher Position des Behälterstapels der Behälter steht, aufgrund der gleichmäßigen und präzisen Verteilung des Gasgemisches einheitlich betäubt werden können. Durch diese Ausbildung wird auf besonders einfache und effektive Weise das First- in-First-out-Prinzip sichergestellt, indem die Behälter eines Stapels in der Reihenfolge ihrer Befüllung mit dem Gasgemisch zum Ende des Betäubungstunnels wieder ausgegeben werden.

Die vorliegende Erfindung ist jedoch nicht allein auf die Verwendung von Gasen oder Gasgemischen zur Betäubung beschränkt, die schwerer als die Umgebungsluft sind. Vielmehr können auch Betäubungsgase oder Betäubungsgasgemische zum Einsatz kommen, die leichter als die Umgebungsluft sind oder deren Dichte derjenigen der Umgebungsluft entspricht. Unter Gasgemisch im Sinne der Erfindung sind sowohl Gasgemische als auch reine Gase gemeint, die beispielsweise allein aufgrund des herrschenden Druckes in ihrem Speicher in die Behälter getrieben werden.

Eine vorteilhafte Ausführungsform ist dadurch gekennzeichnet, dass die Betäubungskammer als geschlossener Betäubungstunnel ausgebildet ist und eine horizontal ausgerichtete Betäubungsstrecke bildet und der oder jeder Transportförderer entlang der Betäubungsstrecke zum horizontalen Transportieren des oder jedes Behälters in einer Ebene E von Betäubungszone zu Betäubungszone ausgebildet und eingerichtet ist. Dadurch ist eine kompakte und bezüglich der Länge der Transportstrecke optimierte Betäubung sichergestellt. Insbesondere gewährleistet die erfindungsgemäße Ausbildung eine bezüglich der von den Behältern zurückzulegenden Wegstrecke - insbesondere zwischen der Betäubungszone vollständiger und vorzugsweise nicht reversibler Bewusstlosigkeit bis zur Übergabe an die Schlachtlinie - optimierte Vorrichtung. Des Weiteren lässt sich der Betäubungstunnel durch seine ausschließlich horizontale Erstreckung modulartig zusammenstellen, so dass je nach Bedarf die Anzahl einzelner Module in Form zusätzlicher Betäubungszonen zum Zuführen von Gasgemischen unterschiedlicher Konzentrationen des Betäubungsgases bzw. zum Auffüllen von Gasgemischen und/oder zusätzlicher Evakuierungszonen zum Absaugen des Gasgemisches variabel veränderbar ist. Dass der Betäubungstunnel geschlossen ausgebildet ist, bedeutet, dass dieser insbesondere im Bereich der Betäubungszonen zu allen Seiten geschlossen ausgebildet ist. Im Bereich der Eingabestation und Ausgabestation weist der Betäubungstunnel Öffnungen zum Eingeben der Behälterstapel und zum Ausgeben der Behälterstapel auf. Zusätzlich kann der Betäubungstunnel aus Sicherheitsgründen auch gegenüber der Umgebung abgedichtet ausgebildet sein, insbesondere im Bereich der Öffnungen sowie zwischen den einzelnen Betäubungszonen in Form von Schleusen oder dergleichen.

Eine zweckmäßige Weiterbildung sieht vor, dass jeder der Betäubungszonen mindestens ein Injektionsrohr zugeordnet ist, derart, dass jede der Betäubungszonen mit einem Gasgemisch, insbesondere unterschiedlicher Konzentration des Betäubungsgases, beaufschlagbar ist. Damit besteht die Möglichkeit, die Injektionsrohre in horizontaler Richtung ortsfest zu platzieren, was den Aufbau der Vorrichtung vereinfacht. Durch die Zuordnung mindestens eines Injektionsrohres zu jeder Betäubungszone sind einerseits eine konstruktiv einfache und andererseits eine den Betäubungsvorgang verkürzende Lösung geschaffen. Durch die Zuordnung der Injektionsrohre zu den jeweiligen Betäubungszonen werden die einzelnen Behälterstapel mittels der Transportförderer von Betäubungszone zu Betäubungszone getaktet transportiert, wobei die Injektionsrohre zum Befüllen der Behälter bei stillstehendem Behälterstapel nur vertikal auf und ab bewegbar ausgebildet sein müssen. Die Zuordnung mindestens eines Injektionsrohres zu jeder Betäubungszone ermöglicht des Weiteren ein paralleles, zeitgleiches Zuführen von Gasgemischen in allen Betäubungszonen. Vorzugsweise richtet sich die Anzahl der Injektionsrohre in jeder Betäubungszone nach der Anzahl der Aufnahmen in den Behältern für solche Injektionsrohre. Je nach Größe der Behälter weisen diese eine Aufnahme, zwei oder mehr als zwei Aufnahmen als Zugang für die Injektionsrohre auf. Damit wird sichergestellt, dass auch bei größeren Behältern zum Aufnehmen großer Geflügeltiere oder zum Aufnehmen einer großen Anzahl von Geflügeltieren eine konstante und gleichmäßige Befüllung mit dem Gasgemisch erfolgen kann. Das oder jedes einer Betäubungszone zugeordnete Injektionsrohr ist vorzugsweise unabhängig von dem oder jedem Injektionsrohr einer benachbarten Betäubungszone bezüglich der vertikalen Verstellung einerseits und/oder des durch das Injektionsrohr strömenden Gasgemisches steuerbar. Diese unabhängige Steuerung bezieht sich jeweils auf die zueinander benachbarten Betäubungszonen. So ist z.B. das oder jedes Injektionsohr einer ersten Betäubungszone mit einer Konzentration von z.B. 5-15% Betäubungsgas im Gasgemisch (Phase I) unabhängig von dem oder jedem Injektionsrohr einer zweiten Betäubungszone mit einer Konzentration von 30-50% Betäubungsgas im Gasgemisch (Phase II) und dieses wiederum unabhängig von dem oder jedem Injektionsrohr einer dritten Betäubungszone mit einer Konzentration von 50-100% Betäubungsgas im Gasgemisch (Phase III) steuerbar. Innerhalb einer Betäubungszone sind die Injektionsrohre bevorzugt gemeinsam oder zumindest synchronisiert steuerbar.

Eine besonders bevorzugte Weiterbildung ist dadurch gekennzeichnet, dass das oder jedes Injektionsrohr an seinem freien Ende einen Adapterkopf aufweist, der zum Adaptieren des Injektionsrohres an dem bzw. in dem oder jedem Behälter eines Behälterstapels ausgebildet und eingerichtet ist, wobei der Adapterkopf mindestens eine Öffnung zum Austritt des Gasgemisches aufweist. Ein solcher Adapterkopf kann zum Koppeln an einem Behälter ausgebildet sein, oder zum Koppeln in einem Behälter. In beiden Fällen ist sichergestellt, dass das aus der oder jeder Öffnung des Adapterkopfes strömende Gasgemisch in den Innenraum des Behälters geleitet wird.

Vorteilhafterweise ist der Adapterkopf als Steckverbindung ausgebildet, derart, dass jedes Injektionsrohr mit seinem Adapterkopf befestigungsmittelfrei mit jedem Behälter dichtend verbindbar ist, derart, dass einerseits die oder jede Öffnung zum Befüllen des oder jedes Behälters mit dem Gasgemisch in den Innenraum des Behälters weist und andererseits der Adapterkopf gegenüber dem Behälter nach außen zur Umgebung hin abgedichtet ist. Zur Umgebung bedeutet in diesem Zusammenhang, dass der Adapterkopf nach unten - zur Bodenwand des Behälters - und nach oben - zu einem Deckelelement des Behälters oder einer Bodenwand des darüber liegenden Behälters - abgedichtet ist, um ein Entweichen des Gasgemisches aus dem Behälter, an den der Adapterkopf adaptiert ist, zu vermeiden. Die Steckverbindung ist eine besonders einfache Form der lösbaren Verbindung, insbesondere wenn das Injektionsrohr von oben auf den Behälter bzw. in den Behälter bzw. den Behälterstapel hineingeführt wird.

Vorzugsweise ist die oder jede Öffnung zum Befüllen in dem Adapterkopf in längsaxialer Ausrichtung des Adapterkopfes zwischen zwei Dichtelementen des Adapterkopfes angeordnet. Damit ist eine präzise Zuführung des Gasgemisches in den Innenraum eines einzelnen Behälters eines Behälterstapels einerseits und eine Abschirmung des Behälters gegenüber anderen Behältern bzw. der Umgebung andererseits gewährleistet. Mit anderen Worten ermöglicht diese Ausführungsform das ausschließliche Befüllen eines einzelnen Behälters eines Behälterstapels zurzeit, während benachbarte Behälter gegenüber dem gerade im Befüllvorgang befindlichen Behälter wirksam abgeschirmt sind.

Eine vorteilhafte Ausführungsform zeichnet sich dadurch aus, dass jedem Injektionsrohr ein Mittel zum Ermitteln der Gaskonzentration des Betäubungsgases im Gasgemisch innerhalb des Behälters und/oder zum optischen Überwachen des Innenraumes des Behälters zugeordnet ist. Mit dieser Ausführung eines vorzugsweise bewegbar ausgebildeten Überwachungssystems kann der Betäubungsvorgang auf besonders effiziente Weise kontrolliert werden. Beispielsweise kann mittels des beanspruchten Mittels die aktuelle Konzentration des Betäubungsgases im zugeführten Gasgemisch ermittelt und aufgezeichnet und/oder das Verhalten der Geflügeltiere in jedem Behälter eines Behälterstapels und in jeder Betäubungszone überwacht und aufgezeichnet werden.

Zweckmäßigerweise umfasst die Vorrichtung eine Steuer- und/oder Regelungseinheit, mittels der die Transportgeschwindigkeit des oder jedes Transportförderers und die Zusammensetzung des Gasgemisches bezüglich der Konzentration des Betäubungsgases im Gasgemisch steuerbar- und/oder regelbar ist. Neben den genannten Steuer- und Regelungsparametern können zusätzlich auch die Bewegung jedes Injektionsrohres, die Eingabestation, die Ausgabestation sowie weitere am Betäubungsvorgang beteiligte Komponenten gesteuert und/oder geregelt werden. Damit ist eine automatisierte und individuell an die jeweiligen Geflügelkörper angepasste Betäubung sichergestellt.

Besonders bevorzugt sind jeder Betäubungszone mindestens zwei Injektionsrohre zugeordnet, die an einem gemeinsamen Versorgungsrohr angeschlossen sind. Dadurch wird eine einfache Befüllung der entsprechende Aufnahmen/Zugänge aufweisenden Behälter in jeder Betäubungszone erreicht. Durch das gemeinsame Versorgungsrohr ist nur ein einzelner Anschluss an eine Zuführeinrichtung für das Gasgemisch notwendig.

Eine besonders vorteilhafte Ausführung zeichnet sich dadurch aus, dass entlang der Transportstrecke mindestens zwei Eingabestationen vorgesehen sind. Dadurch ist eine flexible Steuerung des Betäubens im Hinblick auf die Dauer des Betäubungsvorgangs und/oder der Länge der Transportstrecke in Abhängigkeit der Größe der Geflügeltiere und/oder der Anzahl der Geflügeltiere pro Behälter und/oder des Grads der Betäubung gewährleistet. Durch die mindestens zwei Eingabestationen, die an unterschiedlichen Positionen entlang der Transportstrecke liegen, können die Behälterstapel je nach Inhalt (kleine, mittlere, große Geflügeltiere) oder je nach erwünschtem Betäubungsgrad (CAS oder CAK) räumlich bezogen früher oder später der Betäubungskammer zur Verkürzung oder Verlängerung der Transportdistanz bis zur Ausgabestation zugeführt werden. Dadurch sind mit dieser Vorrichtung alle Geflügeltiere, also kleine, mittlere und große Geflügeltiere, mit derselben Gleichmäßigkeit und Präzision und abgestimmt auf die jeweilige Geflügeltiergröße betäubbar.

Vorteilhafterweise ist die oder jede Eingabestation zum vertikalen und/oder horizontalen Einführen des oder jedes Behälters bzw. Behälterstapels auf die Transportstrecke ausgebildet und eingerichtet. Je nach Gegebenheiten an dem Produktionsstandort kann ein Zuführen in vertikaler Richtung, vorzugsweise von oben, beispielsweise mittels einer Lifteinrichtung, und/oder in horizontaler Richtung von der Seite erfolgen, beispielsweise mit einem Querförderer, um die Behälterstapel in die Betäubungskammer zu führen. Dadurch ist eine kompakte Vorrichtung geschaffen. Entsprechendes gilt im Übrigen auch für die oder jede Ausgabestation.

Eine besonders bevorzugte Weiterbildung ist dadurch gekennzeichnet, dass in Transportrichtung T hinter den Betäubungszonen und vor der Ausgabestation mindestens ein Saugrohr zum Absaugen des Gasgemisches aus jedem Behälter angeordnet ist, wobei das oder jedes Saugrohr vorzugsweise baugleich zum Injektionsrohr ausgebildet ist. Dadurch kann das Gasgemisch in der Weise und vor allem in der Reihenfolge, wie es in die Behälter eingebracht wurde, auch wieder entnommen, nämlich abgesaugt werden, so dass auch hier das auf das Zuführen und Evakuieren des Gasgemisches bezogene FiFo-Prinzip, das eine identische Beaufschlagung aller Geflügeltiere hinsichtlich Konzentration des Betäubungsgases im Gasgemisch und Dauer der Beaufschlagung sicherstellt, unterstützt wird. Im Übrigen wird durch das Vorhandensein einer Evakuierungszone, in der das Gasgemisch aus jedem Behälter abgesaugt wird, sichergestellt, dass das Gasgemisch beim Öffnen der Behälter zum Entnehmen der betäubten Geflügeltiere nicht in die Umgebung gelangt, wodurch die Sicherheit der Vorrichtung erhöht wird. Des Weiteren kann durch das oder jedes Saugrohr zum Absaugen des Gasgemisches dieses wiederverwendet werden, wodurch die Effektivität der Vorrichtung wesentlich verbessert ist.

Zweckmäßigerweise ist die am ausgangsseitigen Ende der Transportstrecke angeordnete Ausgabestation zum vereinzelten Ausgeben der Behälter nach dem Prinzip First-in-First-out (FiFo) ausgebildet und eingerichtet. Das FiFo-Prinzip bezieht sich, wie bereits zuvor erwähnt, demnach nicht auf die Reihenfolge der Eingabe der Behälter bzw. Behälterstapel in die Betäubungskammer sondern auf die Reihenfolge der Befüllung der Behälter eines Behälterstapels mit dem Gasgemisch sowie der Befreiung vom Gasgemisch. Jeder Behälter kann dadurch unmittelbar nach dem Absaugen des Gasgemisches, also dem Evakuieren, mittels der Ausgabestation in den Bereich abgegeben werden, in dem die Geflügeltiere aus dem dann gasbefreiten Innenraum des Behälters entnommen und in die hängende Position, nämlich in so genannte Schäkel zur über-Kopf-Aufnahme, gebracht werden können, während aus den anderen Behälters des Behälterstapels noch das Gasgemisch abgesaugt wird. Dadurch kann die Zeit zwischen dem Betäuben und dem Ausbluten wesentlich verkürzt werden.

Die Aufgabe wird auch durch eine Anordnung mit den eingangs genannten Merkmalen dadurch gelöst, dass die Vorrichtung zum Betäuben nach einem der Ansprüche 1 bis 13 ausgebildet ist und der oder jeder Behälter zum lösbaren Verbinden mit dem oder jedem Injektionsrohr ausgebildet und eingerichtet ist. Mit anderen Worten bilden die Vorrichtung zum Betäuben und der oder jeder Behälter eine aufeinander abgestimmte Einheit, derart, dass die Behälter an das oder jedes Injektionsrohr der Vorrichtung zum Betäuben angepasst sind. Jeder Behälter für sich und insbesondere auch mehrere übereinander gestapelte Behälter sind dazu ausgebildet und eingerichtet, das oder jedes Injektionsrohr aufzunehmen. Das bedeutet, dass jedes Injektionsrohr am oder im Behälter adaptierbar ist, so dass das aus den Injektionsrohren strömende Gasgemisch ausschließlich in einen einzelnen Behälter befüllbar ist.

Vorzugsweise umfasst jeder Behälter wenigstens ein Segment einer Belüftungs- und Entlüftungssäule, das durch das Innenvolumen des Behälters verläuft und wenigstens eine Belüftungs- und Entlüftungsöffnung mit Abstand zu den Seitenwänden aufweist. Als Belüften wird im vorliegenden Fall das Befüllen mit dem Gasgemisch bezeichnet, das mittels Druck in die Behälter gefüllt werden kann. Als Entlüften wird das Absaugen des Gasgemisches aus dem Behälter bezeichnet. Damit ist der Gasaustausch, also das Befüllen und Absaugen, auf einfache und effektive Weise gewährleistet. Durch die vorzugsweise zentrale Anordnung des oder jedes Segmentes ist eine einheitliche und gleichmäßige Belüftung und Entlüftung für jeden Behälter sichergestellt.

Eine bevorzugte Weiterbildung zeichnet sich dadurch aus, dass das oder jedes Segment der Belüftungs- und Entlüftungssäule zum Anschluss an korrespondierende Segmente von Behältern gleicher Bauart ausgebildet und eingerichtet ist. Damit wird das stapelweise Transportieren von mehreren Behältern übereinander von Betäubungszone zu Betäubungszone unterstützt und insbesondere ermöglicht, dass die Behälter eines Behälterstapels in einer Betäubungszone durch das oder jedes der Betäubungszone zugeordnete Injektionsrohr befüllbar sind.

Vorteilhafterweise bilden mehrere der Behälter einen Behälterstapel, derart, dass der Behälterstapel eine aus den Segmenten gebildete, durchgängige Belüftungs- und Entlüftungssäule aufweist, in die das oder jedes Injektionsrohr einbringbar ist. Diese Ausbildung unterstützt die zuvor genannten Vorteile.

Eine bevorzugte Weiterbildung ist dadurch gekennzeichnet, dass die Segmente der Belüftungs- und Entlüftungssäule und die daraus gebildete Belüftungs- und Entlüftungssäule zum Aufnehmen der Injektionsrohre und der den Injektionsrohren zugeordneten Adapterköpfe ausgebildet und eingerichtet sind. Damit wird ein sicheres "Verbinden" von Injektionsrohr und Behälter sichergestellt.

Bei einer vorteilhaften Ausführungsform sind die Segmente der Belüftungs- und Entlüftungssäule so ausgebildet und eingerichtet, die Adapterköpfe form- und/oder reibschlüssig aufzunehmen. Dies ermöglicht eine besonders dichte Adaption der Injektionsrohre an die Behälter.

Zweckmäßigerweise ist die äußere Formgebung und Dimensionierung jedes Adapterkopfes an die innere Formgebung und Dimensionierung jedes Segmentes der Belüftungs- und Entlüftungssäule angepasst. Diese Ausführung unterstützt das einfache und schnelle Adaptieren der Injektionsrohre an die Behälter.

Die Aufgabe wird auch durch ein Verfahren mit den eingangs genannten Schritten dadurch gelöst, dass das Gasgemisch mittels mindestens eines relativ zu den Behältern bewegbaren Injektionsrohres direkt von innen in jeden einzelnen Behälter geleitet wird, wobei mehrere Behälter des Behälterstapels in allen Betäubungszonen nacheinander stets von oben nach unten oder stets von unten nach oben mittels des oder jedes Injektionsrohres mit dem Gasgemisch befüllt und die Behälter des Behälterstapels anschließend in der Reihenfolge ihrer Befüllung mit dem Gasgemisch im Bereich der Ausgabestation vereinzelt ausgegeben werden. Das bedeutet, dass alle Behälter eines Behälterstapels in allen Betäubungszonen in der gleichen Reihenfolge mit dem Gasgemisch befüllt werden, nämlich durchgängig von oben nach unten oder durchgängig von unten nach oben. Mit dem FiFo-Prinzip, nämlich das der Behälter eines Behälterstapels, der zuerst in allen Betäubungszonen mit dem Gasgemisch befüllt wird, auch zuerst aus der Vorrichtung ausgeschleust wird, kann für alle Geflügeltiere in allen Behältern eines Behälterstapels eine vergleichbare und damit kontrollierte Betäubung erfolgen.

Vorzugsweise wird das Gasgemisch durch mechanische Ventilation in jeden einzelnen Behälter eines Behälterstapels eingebracht, so dass das Gasgemisch innerhalb der Behälter von innen nach außen strömt. Anstelle der mechanischen Ventilation ist auch jede andere Art der Zuführung des Gasgemisches direkt in die Behälter möglich.

Eine besonders vorteilhafte Weiterbildung ist dadurch gekennzeichnet, dass mindestens zwei übereinander angeordnete Behälter als Behälterstapel im Bereich der Eingabestation in die Betäubungskammer eingegeben und die Behälter des Behälterstapels im Bereich der Ausgabestation vereinzelt wieder ausgegeben werden. Damit wird einerseits ein platzsparendes und leistungsfähiges Betäuben erreicht, verbunden andererseits mit den Vorteilen einer sehr kurzen Zeitspanne zwischen dem Ende des Betäubungsvorgangs und dem Aufhängen der Geflügeltiere an einen Hängeförderer oder dergleichen zum Ausbluten der Geflügeltiere nach dem Kehl- bzw. Köpfschnitt.

Eine besonders vorteilhafte Weiterbildung ist dadurch gekennzeichnet, dass die Behälter des Behälterstapels hinter den Betäubungszonen und vor der Ausgabestation in der Reihenfolge ihrer Befüllung mit dem Gasgemisch wieder vom Gasgemisch befreit und die Behälter des Behälterstapels anschließend in der Reihgenfolge ihrer Befreiung vom Gasgemisch vereinzelt ausgegeben werden. Mit anderen Worten wird das Gasgemisch zuerst aus dem Behälter eines Behälterstapels abgesaugt, der zuerst mit dem Gasgemisch in allen Betäubungszonen befüllt wurde, um das genannte FiFo-Prinzip aufrechtzuerhalten.

Zweckmäßigerweise durchlaufen sämtliche Behälter bzw. Behälterstapel in horizontaler Transportrichtung T nacheinander jeweils mindestens drei Betäubungszonen, nämlich eine erste Phase I mit einer Konzentration von 5-15% Betäubungsgas im Gasgemisch, eine zweite Phase II mit einer Konzentration von 30-50% Betäubungsgas im Gasgemisch und eine dritte Phase II mit einer Konzentration von 50-100% Betäubungsgas im Gasgemisch. Die Anzahl der Phasen und deren Konzentrationsbereiche können selbstverständlich variieren.

Eine bevorzugte Ausführungsform zeichnet sich dadurch aus, dass hinter den Betäubungszonen mit den Phasen I bis III mögliche Schwankungen in der Konzentration des Betäubungsgases im Gasgemisch durch Erhöhen oder Reduzieren der Konzentration des Betäubungsgases im Gasgemisch ausgeglichen werden.

Vorteilhafterweise werden die Gaskonzentration des Betäubungsgases im Gasgemisch und/oder der Innenraum des Behälters überwacht.

Eine bevorzugte Weiterbildung zeichnet sich dadurch aus, dass die Behälter bzw. Behälterstapel wahlweise vertikal von oben oder horizontal von der Seite in die Betäubungskammer geführt werden.

Eine besonders zweckmäßige Ausführungsform ist dadurch gekennzeichnet, dass Behälter bzw. Behälterstapel in Abhängigkeit der Größe der Geflügeltiere und/oder in Abhängigkeit des anzustrebenden Betäubungsgrades der Geflügeltiere in den Behältern an unterschiedlichen Positionen der Betäubungskammer dieser zugeführt werden. Mit anderen Worten kann damit die zeitliche (Durchlaufzeit) und räumliche (Streckenlänge) Distanz zwischen der Zuführung und der Ausgabe der Behälter bzw. Behälterstapel variiert werden.

Weitere sich daraus ergebende Vorteile wurden bereits im Zusammenhang mit der erfindungsgemäßen Vorrichtung und der entsprechenden Anordnung, die sich besonders zur Durchführung des Verfahrens eignen, beschrieben, weshalb zur Vermeidung von Wiederholungen auf die entsprechenden Passagen verwiesen wird.

Weitere zweckmäßige und/oder vorteilhafte Merkmale und Weiterbildungen der erfindungsgemäßen Vorrichtung und der Anordnung sowie bevorzugte Verfahrensschritte des erfindungsgemäßen Verfahrens ergeben sich aus den Unteransprüchen sowie der Beschreibung. Besonders bevorzugte Ausführungsformen der Erfindung werden anhand der beigefügten Zeichnung näher erläutert. In der Zeichnung zeigt:
- Fig. 1: eine schematische Darstellung einer bevorzugten Ausführungsform der erfindungsgemäßen Vorrichtung in Seitenansicht,
- Fig. 2: eine schematische Darstellung der Vorrichtung gemäß Figur 1 in Draufsicht,
- Fig. 3: eine Detaildarstellung der Vorrichtung, nämlich einzelne Behälterstapel auf Transportförderern mit Doppelinjektionsrohren, und
- Fig. 4: eine vergrößerte Darstellung eines Adapterkopfes eines Injektionsrohres.

Die in der Zeichnung darstellte Vorrichtung 10 dient zum Betäuben von Geflügeltieren, nämlich Masthähnchen, die in fünf übereinander angeordneten Behältern als Behälterstapel durch die Betäubungskammer transportiert werden. Die erfindungsgemäße Vorrichtung dient jedoch in gleicher Weise auch zum Betäuben von Geflügeltieren, die in einzelnen Behältern oder in aus zwei oder mehr übereinander angeordneten Behältern gebildeten Behälterstapeln durch die Betäubungskammer transportiert werden. Selbstverständlich ist die Vorrichtung auch zum Betäuben anderer Geflügeltiere, wie Gänsen, Enten oder dergleichen geeignet.

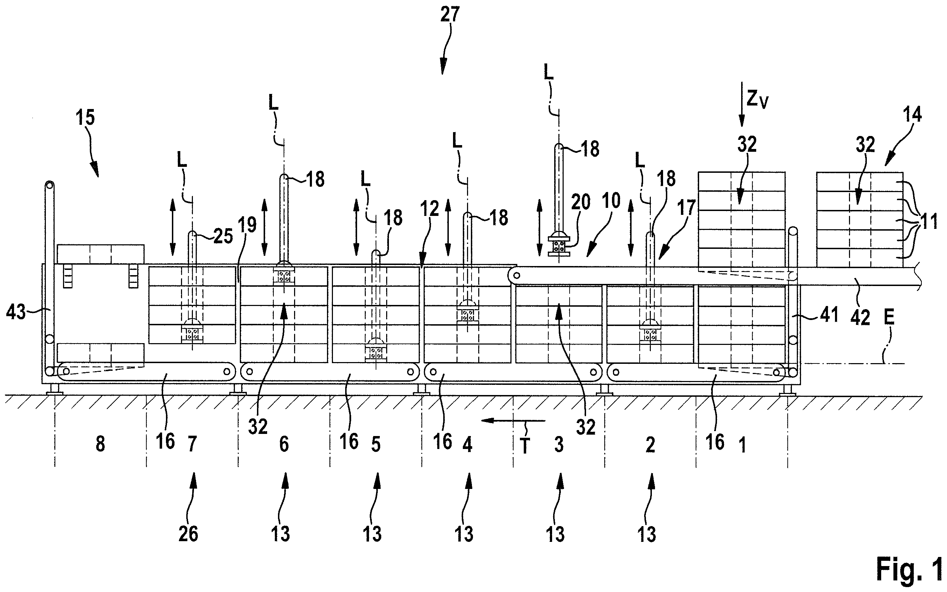

In der Figur 1 ist eine Vorrichtung 10 dargestellt, die zum Betäuben von zum Schlachten vorgesehenen und in Behältern 11 befindlichen, lebenden Geflügeltieren mittels eines ein Betäubungsgas beinhaltenden Gasgemisches ausgebildet und eingerichtet ist. Die Vorrichtung 10 umfasst eine Betäubungskammer 12 mit mindestens zwei Betäubungszonen 13, eine eingangsseitig an der Betäubungskammer 12 angeordnete Eingabestation 14 für jeden lebende Geflügeltiere beinhaltenden Behälter 11 und eine ausgangsseitig an der Betäubungskammer 12 angeordnete Ausgabestation 15 für jeden betäubte Geflügeltiere beinhaltenden Behälter 11, mindestens einen Transportförderer 16 zum Transportieren jedes Behälters 11 von der Eingabestation 14 zur Ausgabestation 15 in Transportrichtung T durch die Betäubungszonen 13, sowie Mittel 17 zum Zuführen des Gasgemisches in die Betäubungszonen 13 der Betäubungskammer 12.

Diese Vorrichtung 10 zeichnet sich erfindungsgemäß dadurch aus, dass das Mittel 17 zum Zuführen des Gasgemisches mindestens ein Injektionsrohr 18 umfasst, das zum lösbaren Verbinden mit dem oder jedem Behälter 11 und zum Lösen von diesem relativ zum Behälter 11 bewegbar ausgebildet und eingerichtet ist, derart, dass jeder Behälter 11 im Zustand der lösbaren Verbindung mit dem oder jedem Injektionsrohr 18 mit dem Gasgemisch befüllbar ist, wobei jedes Injektionsrohr 18 ist zum Bewegen in das Innere jedes einen Behälterstapel bildenden Behälters 11 und zum Bewegen aus dem oder jedem Behälter 11 ausgebildet und eingerichtet, derart, dass jeder Behälter 11 des Behälterstapels mit den darin befindlichen Geflügeltieren individuell und von innen gerichtet mit dem aus dem oder jedem Injektionsrohr 18 strömenden Gasgemisch befüllbar ist, wobei das oder jedes Injektionsrohr 18 oberhalb der Transportstrecke angeordnet und vertikal auf und ab bewegbar ausgebildet, derart, dass das Injektionsrohr 18 aus einer oberen Warteposition, in der das Injektionsrohr 18 mit seinem freien Ende vollständig außerhalb des dem Injektionsrohr 18 am nächsten liegenden Behälters 11 eines unter dem Injektionsrohr 18 stehenden Behälterstapels positioniert ist, in eine untere Arbeitsposition, in der das Injektionsrohr 18 mit seinem freien Ende innerhalb eines beliebigen Behälters 11 des Behälterstapels positioniert ist, und zurück bewegbar ist. Wahlweise kann der oder jeder Behälter 11 auf das oder jedes Injektionsrohr 18 zu und von diesem weg bewegbar sein. Bevorzugt ist jedoch der oder jeder Behälter 11 bzw. Behälterstapel während der Befüllung mit dem Gasgemisch ortsfest positioniert, so dass das oder jedes Injektionsrohr 18 auf den oder jeden Behälter 11 bzw. Behälterstapel zu und von diesem weg bewegbar ist. Optional ist auch eine überlagerte Bewegung von Behälter 11 bzw. Behälterstapel und Injektionsrohr 18 möglich. Die Relativbewegung zwischen dem oder jedem Behälter 11 bzw. Behälterstapel und Injektionsrohr 18 kann in unterschiedlicher Richtung erfolgen, bevorzugt in horizontaler Richtung und besonders bevorzugt in vertikaler Richtung.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können. Entsprechendes gilt für die weiter unten beschriebene Anordnung sowie das weiter unten beschriebene Verfahren.

Die in der Zeichnung dargestellte Ausführungsform der Vorrichtung 10 weist insgesamt fünf Betäubungszonen 13 auf. Die Anzahl der Betäubungszonen 13 kann jedoch variieren. Zum Transport der Behälter 11 bzw. Behälterstapel aus einem Behälter 11 oder vorzugsweise zwei bis zehn Behältern 11 durch die Betäubungskammer 12 sind mehrere Transportförderer 16 vorgesehen, die gemeinsam oder vorzugsweise separat antreibbar und steuerbar sind. Für den Fall, dass mehrere Transportförderer 16 hintereinander angeordnet sind, können diese aufeinander abgestimmt betätigt werden. Die Betäubungskammer 12 ist wie dargestellt ein offenes System, derart, dass diese weder zu allen Seiten geschlossen noch gegenüber der Umgebung abgedichtet sein muss, zumal die Behälter 11 für sich betrachtet oder als Behälterstapel jeweils eine im Wesentlichen geschlossene und optional auch gasdichte Einheit bilden.

Das oder jedes Injektionsrohr 18 ist bevorzugt ein starres Rohrelement mit einem am freien Ende befindlichen Auslass für das Gasgemisch. Das Injektionsrohr 18 kann aber auch ein flexibles Schlauchelement oder jede andere ein Gasgemisch leitende Komponente sein. Die Ausbildung zum Bewegen in das Innere und aus dem Inneren heraus schließt auch Ausführungen ein, bei denen das Injektionsrohr 18 lediglich an den Behälter 11 heran und von diesem weg bewegbar ist, derart, dass der oder jeder Auslass in das Innere des Behälters 11 gerichtet ist. Dazu muss das Injektionsrohr 18 nicht zwingend in den zu befüllenden Behälter 11 eintauchen. Letztere Ausführungsform ist jedoch bevorzugt. Das Injektionsrohr 18 ist stufenlos und vorzugsweise schrittweise von Behälter 11 zu Behälter 11 eines Stapels nach unten und wieder nach oben bewegbar.

Die Betäubungskammer 12 ist vorzugsweise als geschlossener Betäubungstunnel 19 ausgebildet und bildet eine horizontal ausgerichtete Betäubungsstrecke. Der oder jeder Transportförderer 16 ist entlang der Betäubungsstrecke zum horizontalen Transportieren des oder jedes Behälters 11 bzw. Behälterstapels in einer Ebene E durch die gesamte Vorrichtung 10 und entsprechend auch von Betäubungszone 13 zu Betäubungszone 13 ausgebildet und eingerichtet. Der Betäubungstunnel 19 ist vorzugsweise zu allen Seiten (mit Ausnahme der Öffnungen zum Zuführen und Ausgeben der Behälter 11 bzw. Behälterstapel) geschlossen ausgebildet. Optional kann der Betäubungstunnel 19 auch durch nicht explizit dargestellte Mittel, z.B. in Form von sichtbaren oder nicht sichtbaren Schleusen oder dergleichen, dichtend gegenüber der Umgebung ausgebildet sein. Solche Mittel zum Dichten können auch zwischen den einzelnen Betäubungszonen 13 vorhanden sein.

Vorzugsweise ist jeder der Betäubungszonen 13 mindestens ein Injektionsrohr 18 zugeordnet, derart, dass jede der Betäubungszonen 13 mit einem Gasgemisch, insbesondere unterschiedlicher Konzentration des Betäubungsgases, beaufschlagbar ist. Diese Injektionsrohre 18 sind in horizontaler Richtung in Transportrichtung T ortsfest ausgebildet. In anderen Ausführungsformen können einzelne Injektionsrohre 18 oder alle Injektionsrohre 18 auch horizontal in und entgegen der Transportrichtung T verstellbar und bewegbar ausgebildet sein. Optional kann auch nur einer Betäubungszone 13 ein Injektionsrohr 18 oder mehrere Injektionsrohre 18 zugeordnet sein, die dann von Betäubungszone 13 zu Betäubungszone 13 bewegbar sind. Jede Position des Injektionsrohres 18 innerhalb eines Behälters 11 stellt eine Arbeitsposition dar. In der Figur 1 ist eine Vorrichtung 10 gezeigt, die beispielhaft insgesamt über acht Abschnitte 1 bis 8 verfügt. Im Abschnitt 3 befindet sich ein Injektionsrohr 18 in Warteposition. In den Abschnitten 2 und 4 bis 6 befinden sich die Injektionsrohre 18 in einer Arbeitsposition, jedoch in unterschiedlichen Ebenen, also in bezüglich der Höhe unterschiedlichen Behältern 11 eines Behälterstapels. Die Anzahl der Abschnitte kann jedoch variieren.

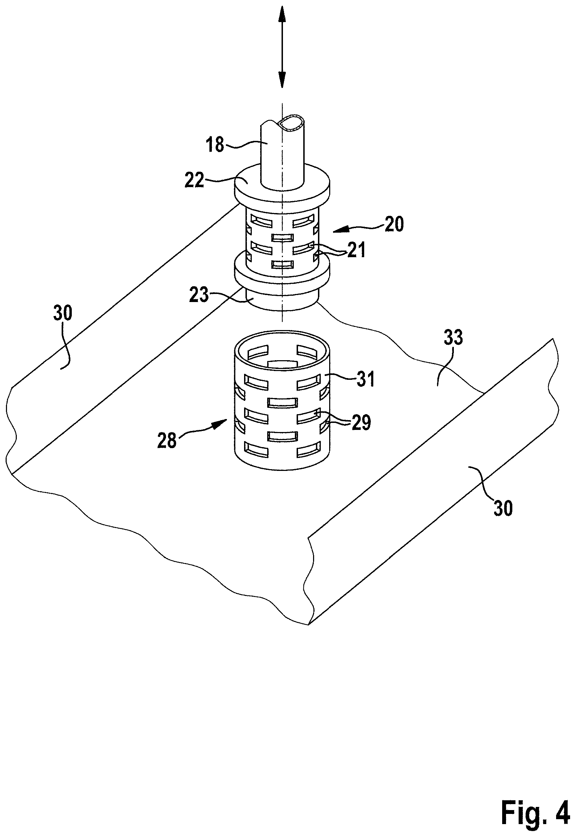

Jedes Injektionsrohr 18 weist an seinem freien Ende einen Auslass auf, und zwar in Form eines Adapterkopfes 20. Der Adapterkopf 20 ist zum Adaptieren des Injektionsrohres 18 an dem bzw. in dem oder jedem Behälter 11 eines Behälterstapels ausgebildet und eingerichtet, wobei der Adapterkopf 20 mindestens eine Öffnung 21 zum Austritt des Gasgemisches aufweist. Der Adapterkopf 20 weist ebenso wie das Injektionsrohr 18 selbst vorzugsweise einen kreisförmigen Querschnitt auf. Im Bereich des Adapterkopfes 20 sind in der Umfangsfläche desselben mehrere Öffnungen 21 vorgesehen (siehe z.B. Figur 4), die sich vorzugsweise gleichmäßig über den gesamten Umfang verteilen, so dass ein Austritt des Gasgemisches in einem 360°-Winkel erfolgen kann. In alternativen und nicht dargestellten Ausführungsformen kann jedes Injektionsrohr 18 auch über die gesamte (Funktions-)Länge mit Öffnungen 21 versehen sein, so dass alle Behälter 11 eines Behälterstapels zeitglich mit dem Gasgemisch befüllbar sind. In einem solchen Fall dient quasi das gesamte Injektionsrohr 18 als Adapterkopf 20.

Vorzugsweise ist der Adapterkopf 20 als Steckverbindung ausgebildet, derart, dass jedes Injektionsrohr 18 mit seinem Adapterkopf 20 befestigungsmittelfrei mit jedem Behälter 11 - bevorzugt dichtend - verbindbar ist, derart, dass einerseits die oder jede Öffnung 21 zum Befüllen des oder jedes Behälters 11 mit dem Gasgemisch in den Innenraum des Behälters 11 weist und andererseits der Adapterkopf 20 gegenüber dem Behälter 11 nach außen zur Umgebung, also zu benachbarten Behältern 11 eines Behälterstapels oder zur behälterfreien Umgebung hin abgedichtet ist. Dazu ist die oder jede Öffnung 21 zum Befüllen in dem Adapterkopf 20 in längsaxialer Ausrichtung des Adapterkopfes 20 zwischen zwei Dichtelementen 22, 23 des Adapterkopfes 20 angeordnet. Letztlich reicht es aus, dass das Injektionsrohr 18 in einen Behälter 11 bewegbar ist, derart, dass das obere Dichtelement 22 den Behälterinnenraum nach oben hin abdichtet, während das untere Dichtelement 23 den Behälterinnenraum nach unten hin abdichtet, so dass die oder jede Öffnung 21 in den Innenraum weist und das Gasgemisch gezielt und ausschließlich in den einen Behälter 11 leitet, dem das Injektionsrohr 18 gerade zugeordnet ist. Optional kann das Injektionsrohr 18 über seine Länge verteilt, vorzugsweise im Abstand der Behälter 11, weitere Dichtelemente aufweisen, die das Vermischen von Luft/Gasgemisch zwischen den einzelnen Behältern 11 eines Behälterstapels verhindern.

In der beispielhaften Ausführungsform sind jeder Betäubungszone 13 in den Abschnitten 2 bis 6 zwei Injektionsrohre 18 zugeordnet, die vorzugsweise an einem gemeinsamen Versorgungsrohr 24 angeschlossen sind. Die beiden Injektionsrohre 18 mit dem zugehörigen Versorgungsrohr 24 bilden bevorzugt eine bewegbar Einheit, die auf und ab bewegbar ausgebildet ist. Vorzugsweise ist jede dieser Einheiten an eine eigene und separate Gasversorgung angeschlossen, um in jeder Betäubungszone 13 eine individuelle und variabel steuerbare Konzentration des Betäubungsgases im Gasgemisch bereitstellen zu können. Die Anzahl der Injektionsrohre 18 pro Einheit, die an ein gemeinsames Versorgungsrohr 24 angeschlossen sind, kann variieren.

Optional ist jeder dieser Einheiten oder jedem Injektionsrohr 18 ein (nicht explizit dargestelltes) Mittel zum Ermitteln der Gaskonzentration des Betäubungsgases im Gasgemisch innerhalb des Behälters 11 und/oder zum optischen Überwachen des Innenraumes des Behälters 11 zugeordnet ist. Dieses Überwachungssystem in Gestalt des Mittels ist vorzugsweise an dem oder jedem Injektionsrohr 18 angeordnet. Dieses Mittel kann Gassensoren und/oder eine Kamera und/oder andere Detektionskomponenten umfassen, die im Zusammenhang mit dem Betäubungsvorgang in einem Behälter relevante Informationen liefern. Besonders bevorzugt ist das Mittel im Bereich des Adapterkopfes 20 angeordnet. Um eine möglichst präzise und umfassende Überwachung sicherzustellen, kann das oder jedes Injektionsrohr 18 oder zumindest der Adapterkopf 20 rotierend um die Längsachse L jedes Injektionsrohres 18 ausgebildet sein. Diese Möglichkeit der rotierenden Antreibbarkeit besteht grundsätzlich für jedes Injektionsrohr 18 oder dessen Adapterkopf 20.

Besonders bevorzugt umfasst die Vorrichtung 10 eine Steuer- und/oder Regelungseinheit, mittels der die Transportgeschwindigkeit des oder jedes Transportförderers 16 und die Zusammensetzung des Gasgemisches bezüglich der Konzentration des Betäubungsgases im Gasgemisch steuerbar- und/oder regelbar ist. Mittels der Steuer- und Regelungseinheit lassen sich auch die weiteren Komponenten der Vorrichtung 10, wie z.B. die oder jede Eingabestation 14, die Ausgabestation 15 und die Injektionsrohre 18 - bezüglich ihrer Bewegbarkeit - steuern und regeln. Vorzugsweise sind alle Zonen in den Abschnitten 1 bis 8, also der Eingabebereich, die Betäubungszonen 13, der Evakuierungsbereich und der Ausgabebereich, separat und unabhängig voneinander Steuer- und regelbar. Mittels der übergeordneten Steuer- und/oder Regelungseinheit wird aber eine aufeinander abgestimmt und kontinuierliche Funktionsweise der Vorrichtung 10 sichergestellt.

Optional sind entlang der Transportstrecke mindestens zwei Eingabestation 14 vorgesehen. In der dargestellten Ausführungsform sind beispielhaft drei Eingabestationen 14 vorgesehen, die in Transportrichtung T der Transportförderer 16 hintereinander angeordnet sind. Mit anderen Worten ist den Abschnitten 1, 2 und 3 jeweils eine Eingabestation 14 zugeordnet. Die Eingabestationen 14 sind zum einen zum horizontalen Zuführen der Behälter 11 bzw. Behälterstapel ausgebildet, um die Behälter 11 bzw. Behälterstapel vertikal oberhalb der Transportförderer 16 zu platzieren. Zum anderen weisen die Eingabestationen 14 eine gemeinsame Lifteinrichtung 41 oder jeweils separate Lifteinrichtungen 41 auf, die zum vertikalen Absenken der Behälter 11 bzw. Behälterstapel in dem jeweiligen Abschnitt 1 bis 3 auf den Transportförderer 16 ausgebildet und eingerichtet sind.

Mittels einer Zuführeinrichtung 42, die Bestandteil der Vorrichtung 10 sein kann, sind die Behälter 11 bzw. Behälterstapel an die Vorrichtung 10 zu übergeben. Im Bereich der horizontalen Eingabestationen 14 kann ein Schiebemechanismus vorgesehen sein, mittels dem die Behälter 11 bzw. Behälterstapel quer zur Transportrichtung T in eine Position oberhalb der Transportförderer 16 der Vorrichtung 10 schiebbar sind. Mittels der Lifteinrichtung 41 sind die Behälter 11 bzw. Behälterstapel absenkbar. Optional kann die oder jede Eingabestation 14 auch direkt zur vertikalen Zuführung der Behälter 11 bzw. Behälterstapel auf die Transportförderer 16 ausgebildet und angeordnet sein. Es ist auch möglich, dass die Behälter 11 bzw. Behälterstapel mittels einer Eingabestation 14 in Transportrichtung T horizontal von der Stirnseite der Vorrichtung 10 oder in der Transportebene E seitlich auf die Transportförderer 16 zugeführt werden.

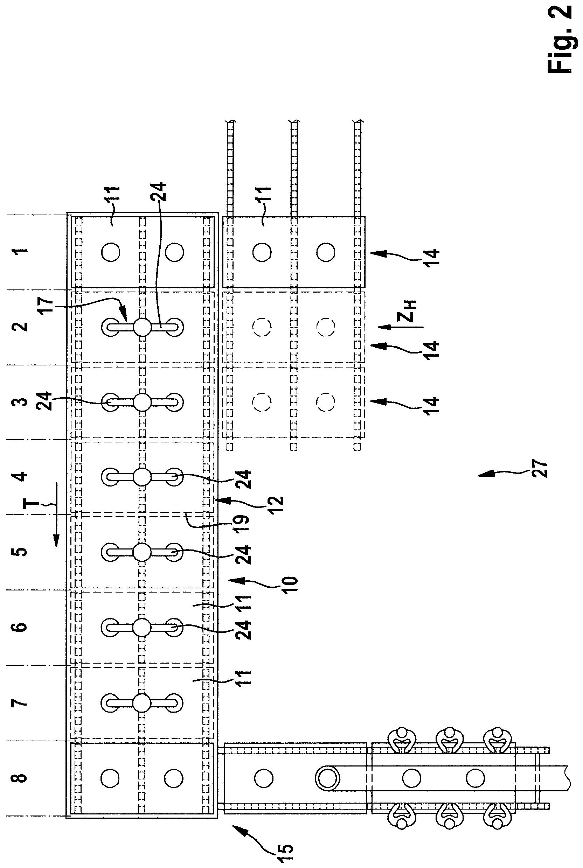

Durch die bevorzugte Ausbildung der Eingabestationen 14 in Transportrichtung T hintereinander, wie in Figur 2 besonders deutlich sichtbar, kann die Länge der Transportstrecke in Abhängigkeit der Größe der zuzuführenden Geflügeltiere variiert werden. Behälter 11 mit großen Geflügeltieren können beispielsweise mittels der in Transportrichtung T vordersten horizontalen Eingabestation 14 in den Abschnitt 1 zugeführt werden, um eine möglichst lange Transportstrecke zu schaffen. Behälter 11 mit Geflügeltieren mittlerer Größe können mittels der Eingabestation 14 in den Abschnitt 2 zugeführt werden. Behälter 11 mit kleinen Geflügeltieren können mittels der Eingabestation 14 in den Abschnitt 3 zugeführt werden. Die Anzahl der Eingabestationen 14 sowie deren Positionen können variieren. Insgesamt kann auch die Anzahl der Abschnitte 1 bis 8 reduziert oder erhöht werden.

In Transportrichtung T hinter den Betäubungszonen 13 und vor der Ausgabestation 15 ist mindestens ein Saugrohr 25 zum Absaugen des Gasgemisches aus jedem Behälter 11 angeordnet, wobei das oder jedes Saugrohr 25 vorzugsweise baugleich zum Injektionsrohr 18 ausgebildet ist. Das Saugrohr 25 befindet sich im Beispiel im Abschnitt 7 der Vorrichtung 10 zur Bildung einer Evakuierungszone 26. Bezüglich der Ausbildung, Anordnung und Funktionsweise des oder jedes Saugrohres 25 wird zur Vermeidung von Wiederholungen auf die Beschreibung zu dem oder jedem Injektionsrohr 18 verwiesen. Für den Fall, dass alle Behälter 11 des Behälterstapels gleichzeitig mit dem Gasgemisch befüllt werden, weist das oder jedes Saugrohr 25 vergleichbar dem entsprechenden Injektionsrohr 18 auch über die gesamte Länge Öffnungen auf, so dass alle Behälter 11 eines Behälterstapels zeitgleich vom Gasgemisch befreit werden können.

Die am ausgangsseitigen Ende der Transportstrecke angeordnete Ausgabestation 15 zum vereinzelten Ausgeben der Behälter 11 ist nach dem Prinzip First-in-First-out (FiFo) ausgebildet und eingerichtet. Das bedeutet, dass zuerst der Behälter 11 eines Behälterstapels aus dem Betäubungstunnel 12 und genauer aus der Evakuierungszone 26 ausgegeben wird, der zuerst mit dem Gasgemisch in den Betäubungszonen 13 befüllt wurde und der entsprechend zuerst vom Gasgemisch in der Evakuierungszone 26 befreit wurde. Das FiFo-Prinzip bezieht sich demnach nicht auf die Reihenfolge der Eingabe der Behälter 11 bzw. Behälterstapel in die Betäubungskammer 12 sondern auf die Reihenfolge der Befüllung mit dem Gasgemisch sowie die Befreiung vom Gasgemisch. Zum Vereinzeln der Behälter 11 aus einem Behälterstapel können entsprechende Hilfsmittel, z.B. in Form von Liftelementen, Schub- oder Zugelementen oder dergleichen vorgesehen sein. Mittels einer Lifteinrichtung 43 können die einzelnen Behälter 11 eines Behälterstapels aus der Vorrichtung 10 abgegeben werden.

In weiteren nicht explizit dargestellten Ausführungsformen können die einzelnen Abschnitte der Vorrichtung 10, also z.B. die Betäubungszonen 13 und die Evakuierungszone 26 abweichend von der linearen Erstreckung gemäß der Figuren 1 und 2 auch in einer bogenförmigen, kreisförmigen (zur Bildung einer karussellartigen Anordnung) oder meanderförmigen Ausrichtung hintereinander angeordnet sein.

Die Erfindung beschreibt auch eine Anordnung 27 zum Betäuben von zum Schlachten vorgesehenen und in Behältern 11 befindlichen, lebenden Geflügeltieren mittels eines ein Betäubungsgas umfassenden Gasgemisches, umfassend eine Vorrichtung 10 zum Betäuben von zum Schlachten vorgesehenen und in Behältern 11 befindlichen, lebenden Geflügeltieren mittels eines ein Betäubungsgas umfassenden Gasgemisches sowie mindestens zwei Behälter 11 zum Transportieren der Geflügeltiere durch die Vorrichtung 10. Diese Anordnung 27 zeichnet sich erfindungsgemäß dadurch aus, dass die Vorrichtung 10 zum Betäuben nach einem der Ansprüche 1 bis 13 ausgebildet ist und jeder Behälter 11 zum lösbaren Verbinden mit dem oder jedem Injektionsrohr 18 ausgebildet und eingerichtet ist. Anders ausgedrückt ist die Vorrichtung 10 in der zuvor beschriebenen Weise ausgebildet. Der oder jeder Behälter 11 ist zur Herstellung einer Wirkverbindung mit dem oder jedem Injektionsrohr 18 der Vorrichtung 10 angepasst. Mit der Wirkverbindung wird ein Zustand beschrieben, in dem das oder jedes Injektionsrohr 18 derart mit dem oder jedem Behälter 11 zusammengeführt werden kann, dass eine Einzelbefüllung jedes Behälters 11 mit dem aus dem oder jedem Injektionsrohr 18 strömenden Gasgemisch gewährleistet ist. Mit anderen Worten verfügt jeder Behälter 11 über einen entsprechenden Zugang.

Als Behälter 11 kommen insbesondere die Transportbehälter in Betracht, mittels denen die Geflügeltiere aus den Farmen mit einem LKW oder dergleichen zu den Schlachthöfen transportiert werden, so dass ein Umladen der Geflügeltiere vermieden wird. Jeder Behälter 11 umfasst wenigstens ein Segment 28 einer Belüftungs- und Entlüftungssäule, das durch das Innenvolumen verläuft und wenigstens eine Belüftungs- und Entlüftungsöffnung 29 mit Abstand zu den Seitenwänden 30 aufweist. Die Segmente 28 der Belüftungs- und Entlüftungssäule dienen während des Transports der Geflügeltiere sowie während der Wartephase vor den Schlachthöfen dazu, die Geflügeltiere ausreichend und gleichmäßig zu belüften. Dieses oder jedes Segment 28, Behälter 11 können auch zwei oder mehr solcher Segmente 28 aufweisen, bildet den Zugang für ein Injektionsrohr 18. Die Segmente 28 weisen vorzugsweise einen kreisförmigen Querschnitt auf. Jedes Segment 28 ist quasi aus einem rohrförmigen Abschnitt 31 gebildet, der zu beiden Stirnseiten nach oben und unten offen ist. In der Mantelfläche des Abschnitts 31 ist mindestens eine Öffnung 29 ausgebildet. Vorzugsweise sind über den Umfang des Abschnitts 31 viele Belüftungs- und Entlüftungsöffnungen 29 vorgesehen.

Das oder jedes Segment 28 der Belüftungs- und Entlüftungssäule ist zum Anschluss an korrespondierende Segmente 28 von Behältern 11 gleicher Bauart ausgebildet und eingerichtet. Das führt dazu, dass ein aus zwei oder mehr Behältern 11 gebildeter Behälterstapel mindestens eine aus den Segmenten 28 gebildete, durchgängige Belüftungs- und Entlüftungssäule 32 aufweist, in die das oder jedes Injektionsrohr 18 einbringbar ist. Dazu sind die Segmente 28 der Belüftungs- und Entlüftungssäule und die daraus gebildete Belüftungs- und Entlüftungssäule 32 zum Aufnehmen der Injektionsrohre 18 und der den Injektionsrohren 18 zugeordneten Adapterköpfe 20 ausgebildet und eingerichtet. Vorzugsweise sind die Segmente 28 der Belüftungs- und Entlüftungssäule ausgebildet und eingerichtet, die Adapterköpfe 20 form- und/oder reibschlüssig aufzunehmen. Bevorzugt ist die äußere Formgebung und Dimensionierung jedes Adapterkopfes 20 an die innere Formgebung und Dimensionierung jedes Segmentes 28 der Belüftungs- und Entlüftungssäule angepasst, so dass die Adapterköpfe 20 in die Segmente 28 steckbar und der Innenraum des Behälters 11 mittels der Dichtelemente 22, 23 gegenüber der Umgebung abdichtbar ist. In der dargestellten Ausführungsform sind die Segmente 28 in vertikaler Richtung ausgerichtet. Möglich sind aber auch horizontal verlaufende Segmente 28.

Die Behälter 11 weisen vorzugsweise eine geschlossene Bodenwand 33 und geschlossenen Seitenwände 30 auf. Optional können in den Seitenwänden 30 Öffnungen, vorzugsweise Belüftungs- und Entlüftungsöffnungen, vorgesehen sein. Nach oben hin ist jeder Behälter 11 vorzugsweise dichtend oder nicht dichtend geschlossen, wahlweise durch eine Bodenwand 33 eines im Behälterstapel darüber liegenden Behälters 11 oder durch einen Deckel, der dann einen Zugang für das oder jedes Injektionsrohr 18 aufweist. Durch diese Ausbildung stellt jeder Behälter 11 quasi eine eigene und separate Betäubungskammer dar.

Für alle zuvor beschriebenen Ausführungsformen der Vorrichtung 10, der Anordnung 27 sowie der Behälter 11 oder daraus gebildeten Behälterstapeln ist grundsätzlich anzumerken, dass für den Fall, dass ein tatsächlich geschlossenes, also luftdichtes bzw. gasdichtes oder zumindest annähernd luftdichtes bzw. gasdichtes, System gebildet wird, aus dem keine signifikante Menge an Luft oder Gasgemisch entweichen kann, Ausgleichsmittel vorgesehen sind. Das bedeutet, dass das in den geschlossenen Behältern 11, den geschlossenen Behälterstapeln, der geschlossenen Vorrichtung 10 oder einer geschlossenen Kammer, in der die Vorrichtung 10 angeordnet ist, eingebrachte Gasgemisch ohne Ausgleichsmittel zu einer Druckerhöhung im System führen würde, da das Volumen in dem geschlossenen System durch das zugeführte Gasgemisch steigen würde. Um dieses zusätzliche Volumen zu kompensieren, sind die Ausgleichsmittel z.B. in Form von Absaugeinrichtungen, Saugleitungen, Abzugshauben oder dergleichen vorgesehen. Diese Ausgleichsmittel sind in Ausführungsformen, bei denen die Behälter 11 teilweise offen ausgebildet sind, in Behälterstapeln zwischen den einzelnen Behältern 11 des Behälterstapels Spalte vorgesehen sind, oder bei denen die Vorrichtung 10 bzw. die Kammer, in der die Vorrichtung 10 angeordnet ist, Lüftungsschlitze oder dergleichen aufweist, gar nicht oder nur bedingt vorgesehen.

Zur Überprüfung der Gaskonzentration in dem Behälter 11, in dem Behälterstapel, in der Vorrichtung 10 oder in der Kammer, in der die Vorrichtung 10 angeordnet ist, können Gassensoren oder andere geeignete Messmittel vorgesehen sein. Die Gassensoren oder andere Messmittel können beispielsweise in den Behältern 11 selbst angeordnet sein. In anderen Ausführungsformen können die Gassensoren oder andere Messmittel auch an den Positionen innerhalb der Vorrichtung 10 angeordnet sein, an denen die Behälter 11 oder Behälterstapel mit dem Gasgemisch beaufschlagt oder von diesem befreit werden. Das durch den zuvor beschriebenen Luftaustausch abgesaugte, aufgesammelte oder anderweitig evakuierte Gasgemisch kann dann ebenso wie das im Abschnitt 7 zur Befreiung der Behälter 11 jedes Behälterstapels mittels des Saugrohres 25 abgesaugte Gasgemisch mittels geeigneter Mittel aufgefangen, gespeichert und wiederverwertet werden.

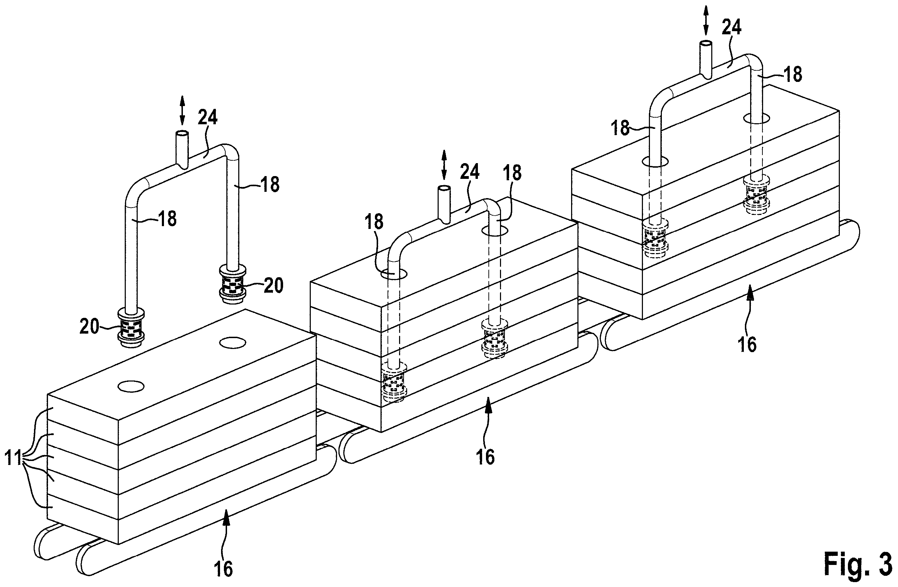

Bei Behältern 11, die mehr als ein Segment 28 aufweisen, wie z.B. in der Figur 3 angedeutet, kann ein Segment 28 zum Zuführen des Gasgemisches ausgebildet und eingerichtet sein, während das zweite Segment 28 als zuvor erwähntes Ausgleichsmittel dient. Die Zuführung des Gasgemisches über das eine Segment 28 erfolgt wie beschrieben über ein Injektionsrohr 18. Das Absaugen über das andere Segment 28 zum Volumenausgleich erfolgt beispielhaft über ein Saugrohr, das vergleichbar zum Injektionsrohr 18 und insbesondere vergleichbar zum Saugrohr 25 der Evakuierungszone 26 ausgebildet und eingerichtet ist. Im Bereich des oder jedes Saugrohres können auch Gassensoren und/oder Kameras oder andere geeignete Messmittel angeordnet sein, um z.B. die Konzentration des Betäubungsgases im Bereich der Zuführung des Gasgemisches sowie im Bereich des Austritts des Gasgemisch zu ermitteln oder um die Geflügeltiere im Bereich des Saugrohres, das im Zusammenwirken mit einem Segment 28 als Ausgleichsmittel verwendet wird, zu überwachen, mit dem Ziel einer möglichst gleichmäßigen Gasgemischverteilung innerhalb jedes Behälters 11.

Im Folgenden wird das Verfahren anhand der Zeichnung näher erläutert. Das Verfahren dient zum Betäuben von zum Schlachten vorgesehenen und in Behältern 11 befindlichen, lebenden Geflügeltieren mittels eines ein Betäubungsgas beinhaltenden Gasgemisches. Zunächst werden lebende Geflügeltiere beinhaltende Behälter 11 durch eine Zuführeinrichtung 42 an die Vorrichtung 10 transportiert und anschließend mittels einer Eingabestation 14 in eine Betäubungskammer 12 zugeführt. Jeder Behälter 11 wird dann durch mindestens zwei Betäubungszonen 13 der Betäubungskammer 12 mittels mindestens eines Transportförderers 16 transportiert. Anschließend wird jeder betäubte Geflügeltiere beinhaltende Behälter 11 mittels einer Ausgabestation 15 aus der Betäubungskammer 12 ausgegeben. Während des Transports jedes Behälters 11 werden die in jedem Behälter 11 befindlichen Geflügeltiere in den Betäubungszonen 13 der Betäubungskammer 12 mit dem Gasgemisch beaufschlagt.

Dieses Verfahren zeichnet sich erfindungsgemäß dadurch aus, dass das Gasgemisch mittels mindestens eines relativ zu den Behältern 11 bewegbaren Injektionsrohres 18 direkt von innen in jeden einzelnen Behälter 11 geleitet wird, wobei mehrere Behälter 11 des Behälterstapels werden in allen Betäubungszonen 13 nacheinander stets von oben nach unten oder stets von unten nach oben mittels des oder jedes Injektionsrohres 18 mit dem Gasgemisch befüllt werden und die Behälter 11 des Behälterstapels anschließend in der Reihenfolge ihrer Befüllung mit dem Gasgemisch im Bereich der Ausgabestation 15 vereinzelt ausgegeben werden.

Vorzugsweise werden mindestens zwei übereinander angeordnete Behälter 11 als Behälterstapel im Bereich der Eingabestation 14 in die Betäubungskammer 12 eingegeben, als Behälterstapel durch die Vorrichtung 10 transportiert und die Behälter 11 des Behälterstapels im Bereich der Ausgabestation 15 vereinzelt wieder ausgegeben. Besonders bevorzugt bilden vier bis sieben Behälter 11 jeweils einen Behälterstapel, der dann durch die Vorrichtung 10 transportiert wird. Nach dem Zuführen des oder jedes Behälterstapels wird dieser in horizontaler Transportrichtung T entlang der Transportstrecke der Betäubungskammer 12 transportiert. In jeder der Betäubungszonen 13 bleibt der Behälterstapel stehen, so dass sich das oder jedes Injektionsrohr 18 nach unten in den Behälterstapel absenken kann. Nachdem alle Behälter 11 des Behälterstapels nacheinander mit dem Gasgemisch befüllt wurden, bewegt sich das oder jedes Injektionsrohr 18 wieder vollständig aus dem Behälterstapel zurück, so dass der Behälterstapel in die nachfolgende Betäubungszone 13 transportiert werden kann. In jeder Betäubungszone 13 wiederholt sich die beschriebene Befüllung mit dem Gasgemisch, bis alle Betäubungszonen 13 durchlaufen sind. Am Ende der Transportstrecke werden die Behälter 11 vereinzelt ausgegeben. Dazu werden die Behälterstapel in der Reihenfolge der Befüllung entstapelt. Wenn also der Behälterstapel in allen Betäubungszonen 13 von oben nach unten befüllt wurde, wird auch zuerst der oberste Behälter 11 des Behälterstapels ausgegeben, dann der von oben zweite Behälter 11 usw. Wenn der Behälterstapel in allen Betäubungszonen 13 von unten nach oben befüllt wurde, wird zuerst der unterste Behälter 11 des Behälterstapels ausgegeben, dann der von unten zweite Behälter 11 usw.

Vorzugsweise wird das Gasgemisch durch mechanische Ventilation in jeden einzelnen Behälter 11 eines Behälterstapels eingebracht, so dass das Gasgemisch innerhalb der Behälter 11 von innen nach außen strömt. Dazu sind die Injektionsrohre 18 an eine Gaszuführeinrichtung angeschlossen. Die Gasgemischmenge bzw. das Gasgemischvolumen sowie die Gasgemischzusammensetzung werden je nach Bedarf gesteuert und/oder geregelt. Optional werden die Behälter 11 des Behälterstapels hinter den Betäubungszonen 13 und vor der Ausgabestation 15 in der Reihenfolge ihrer Befüllung mit dem Gasgemisch wieder vom Gasgemisch befreit und die Behälter 11 des Behälterstapels werden anschließend in der Reihgenfolge ihrer Befreiung vom Gasgemisch vereinzelt ausgegeben.

In der beispielhaft dargestellten Ausführungsform durchlaufen sämtliche Behälter 11 bzw. Behälterstapel in horizontaler Transportrichtung T nacheinander jeweils mindestens drei Betäubungszonen 13, nämlich eine erste Phase I mit einer Konzentration von 5-15% Betäubungsgas im Gasgemisch, eine zweite Phase II mit einer Konzentration von 30-50% Betäubungsgas im Gasgemisch und eine dritte Phase II mit einer Konzentration von 50-100% Betäubungsgas im Gasgemisch. Besonders bevorzugt wird in der Phase I eine Konzentration von ca. 10% Betäubungsgas im Gasgemisch, in Phase II eine Konzentration von ca. 40% Betäubungsgas im Gasgemisch und in der Phase III eine Konzentration von ca. 60% Betäubungsgas im Gasgemisch (für eine tiefe Bewusstlosigkeit, also "stunned") bzw. und 100% Betäubungsgas im Gasgemisch (für eine irreversible Bewusstlosigkeit, dem Hirntod, also "killed") gewählt. Die Gaskonzentrationen können ebenso variieren wie die Anzahl der Phasen. Mögliche Schwankungen der voreingestellten Werte der Gaskonzentration können hinter den Betäubungszonen 13 mit den Phasen I bis III durch Erhöhen oder Reduzieren der Konzentration des Betäubungsgases im Gasgemisch ausgeglichen werden. Abhängig von der Position der Eingabe, also abhängig von der Lage der Eingabestation 14 entlang der Transportstrecke können sich die Phasen I-III entlang der Transportstrecke verschieben bzw. in unterschiedlichen Abschnitten 2 bis 6 liegen.

Die Behälter 11 bzw. Behälterstapel können auch in Abhängigkeit der Größe der Geflügeltiere und/oder in Abhängigkeit des anzustrebenden Betäubungsgrades der Geflügeltiere in den Behältern 11 an unterschiedlichen Positionen der Betäubungskammer 12 dieser zugeführt werden. Rein beispielhaft werden Behälter 11 bzw. Behälterstapel mit großen Geflügeltieren oder mit solchen Geflügeltieren, die bis zum Hirntod betäubt werden sollen, mittels der Eingabestation 14 im Abschnitt 1 eingeführt, und zwar in der Ausführungsform zunächst horizontal und quer zur Transportrichtung T in Zuführrichtung Z_{H} (siehe z.B. Figur 2), so dass die Behälter 11 bzw. Behälterstapel oberhalb des Transportförderers 16 stehen, und dann vertikal nach unten in Zuführrichtung Zᵥ (siehe z.B. Figur 1). Die Zuführung kann auch in der Ebene E quer zur Transportrichtung T in horizontaler Richtung von der Seite der Eingabestation 14 oder in Transportrichtung T von der Stirnseite aus erfolgen. Andere Optionen sind ebenfalls möglich. Nach dem Transport des Behälterstapels in Transportrichtung T in den Abschnitt 2 bleibt der Behälterstapel stehen und das oder jedes Injektionsrohr 18 senkt sich in die Behälter 11 bzw. den Behälterstapel ab und befüllt die Behälter 11 nacheinander mit dem Gasgemisch der Phase I. Dann erfolgt der Transport in den Abschnitt 3, in dem die Behälter 11 des Behälterstapels in derselben Reihenfolge mit dem Gasgemisch der Phase II befüllt werden. Anschließend werden die Behälter 11 des Behälterstapels in dem Abschnitt 4 in derselben Reihenfolge mit dem Gasgemisch der Phase III befüllt. In den Abschnitten 5 und 6 können die Behälter 11 des Behälterstapels durch Zuführen von Gasgemisch höherer oder niedriger Konzentration des Betäubungsgases auf dem Level gehalten werden, der in den zuvor beschriebenen Phasen I bis III erreicht wurde. Im Abschnitt 7 werden die Behälter 11 des Behälterstapels wieder in der Reihenfolge ihrer Befüllung vom Gasgemisch befreit, indem dieses abgesaugt wird. Jeder Behälter 11 des Behälterstapels wird unmittelbar nach der Evakuierung des Gasgemisches einzeln in den Abschnitt 8 übergeben, aus dem der Behälter 11 dann ausgegeben wird.

Behälter 11 mit Geflügeltieren mittlerer Größe können im Abschnitt 2 über die Eingabestation 14 in die Betäubungskammer 12 zugeführt werden. Nach dem Transport in Transportrichtung T in den Abschnitt 3 senkt sich das oder jedes Injektionsrohr 18 in die Behälter 11 bzw. den Behälterstapel ab und befüllt die Behälter 11 nacheinander mit dem Gasgemisch der Phase I. Dann erfolgt der Transport in den Abschnitt 4, in dem die Behälter 11 des Behälterstapels in derselben Reihenfolge mit dem Gasgemisch der Phase II befüllt werden. Anschließend werden die Behälter 11 des Behälterstapels in dem Abschnitt 5 in derselben Reihenfolge mit dem Gasgemisch der Phase III befüllt. In dem Abschnitt 6 können die Behälter 11 des Behälterstapels durch Zuführen von Gasgemisch höherer oder niedriger Konzentration des Betäubungsgases auf dem Level gehalten werden, der in den zuvor beschriebenen Phasen I bis III erreicht wurde. Im Abschnitt 7 werden die Behälter 11 des Behälterstapels wieder in der Reihenfolge ihrer Befüllung vom Gasgemisch befreit, indem dieses abgesaugt wird. Jeder Behälter 11 des Behälterstapels wird unmittelbar nach der Evakuierung des Gasgemisches einzeln in den Abschnitt 8 übergeben, aus dem der Behälter 11 dann ausgegeben wird.

Behälter 11 mit Geflügeltieren kleiner Größe oder mit solchen Geflügeltieren, die unter Vermeidung des Hirntods nur bis zu einer langen, reversiblen Bewusstlosigkeit betäubt werden sollen, werden im Abschnitt 3 über die Eingabestation 14 in die Betäubungskammer 12 zugeführt. Nach dem Transport in Transportrichtung T in den Abschnitt 4 senkt sich das oder jedes Injektionsrohr 18 in die Behälter 11 bzw. den Behälterstapel ab und befüllt die Behälter 11 nacheinander mit dem Gasgemisch der Phase I. Dann erfolgt der Transport in den Abschnitt 5, in dem die Behälter 11 des Behälterstapels in derselben Reihenfolge mit dem Gasgemisch der Phase II befüllt werden. Anschließend werden die Behälter 11 des Behälterstapels in dem Abschnitt 6 in derselben Reihenfolge mit dem Gasgemisch der Phase III befüllt. Im Abschnitt 7 werden die Behälter 11 des Behälterstapels wieder in der Reihenfolge ihrer Befüllung vom Gasgemisch befreit, indem dieses abgesaugt wird. Jeder Behälter 11 des Behälterstapels wird unmittelbar nach der Evakuierung des Gasgemisches einzeln in den Abschnitt 8 übergeben, aus dem der Behälter 11 dann ausgegeben wird.

Die Befüllung der Behälter 11 der Behälterstapel mit dem Gasgemisch in den Abschnitten 2 bis 6 sowie das Absaugen des Gasgemisches im Abschnitt 7 kann nacheinander oder zeitgleich erfolgen. Vorzugsweise werden die Gaskonzentration des Betäubungsgases im Gasgemisch und/oder der Innenraum des Behälters überwacht. Die Überwachung kann auch eine Aufzeichnung der Informationen beinhalten. Die Informationen können zur Steuerung und/oder Regelung der Gaskonzentration sowie weiterer den Betäubungsprozess beeinflussender Parameter (wie z.B. Transportgeschwindigkeit) genutzt werden.

In weiteren optionalen Verfahrensabläufen können auch alle Behälter 11 eines Behälterstapels zugleich befüllt werden. Mit anderen Worten wird allen Behältern 11 eines Behälterstapels in allen Betäubungszonen 13 zeitgleich das Gasgemisch zugeführt und in der Evakuierungszone zeitgleich wieder abgesaugt. In diesem Fall kann auch eine stapelweise Ausgabe erfolgen. Es besteht weiterhin die Möglichkeit, dass das oder jedes Injektionsrohr 18 von Betäubungszone 13 zu Betäubungszone 13, also vom Abschnitt 2 bis zum Abschnitt 6, mitläuft.

Wenn in geschlossenen Systemen, also luftdichten bzw. gasdichten oder zumindest annähernd luftdichten bzw. gasdichten Systemen, Behälter 11, Behälterstapel, Vorrichtungen 10 oder dergleichen mit dem Gasgemisch beaufschlagt werden, erfolgt über geeignete Ausgleichsmittel eine Art Zwangsentlüftung, um den Druck innerhalb des geschlossenen Systems im Wesentlichen konstant zu halten. Durch die Zwangsentlüftung, also das kontrollierte Zuführen des Gasgemisches einerseits und das kontrollierte Abführen des überschüssigen Volumens aus dem jeweiligen Behälter 11 andererseits kann das unkontrollierte Austreten des Gasgemisches aus Behältern 11 eines Behälterstapels, die gerade nicht mit dem Gasgemisch befüllt werden, wirksam verhindert werden. Neben einer gleichmäßigen Gasgemischverteilung innerhalb jedes Behälters 11 eines Behälterstapels dient die beschriebene Vorgehensweise auch zur gleichmäßigen Behandlung aller Behälter 11 eines Behälterstapels, da ein Luftaustausch zwischen den Behältern 11 eines Behälterstapels wirksam verhindert wird.

Am Beispiel eines Behälterstapels mit mehr als zwei Behältern 11, bei dem jeder Behälter 11 zwei Segmente 28 aufweist, kann ein Injektionsrohr 18 in den Behälterstapel eintauchen, und zwar in die eine durch die Segmente 28 gebildete Entlüftungs- und Belüftungssäule, um die Behälter 11 nacheinander mit dem Gasgemisch zu befüllen. Ein Saugrohr kann parallel und zeitgleich in denselben Behälterstapel eintauchen, und zwar in die andere durch die Segmente 28 gebildete Entlüftungs- und Belüftungssäule, um das überschüssige Volumen abzusaugen. Dadurch wird in jedem Behälter 11 während der Befüllung ein Volumenausgleich geschaffen, während die anderen Behälter 11 des Behälterstapels gegenüber dem Gasgemisch abgeschirmt sind.

## Patentansprüche

1. Vorrichtung (10), ausgebildet und eingerichtet zum Betäuben von zum Schlachten vorgesehenen und in Behältern (11) befindlichen, lebenden Geflügeltieren mittels eines ein Betäubungsgas beinhaltenden Gasgemisches, umfassend eine Betäubungskammer (12) mit mindestens zwei Betäubungszonen (13), eine eingangsseitig an der Betäubungskammer (12) angeordnete Eingabestation (14) für jeden lebende Geflügeltiere beinhaltenden Behälter (11) und eine ausgangsseitig an der Betäubungskammer (12) angeordnete Ausgabestation (15) für jeden betäubte Geflügeltiere beinhaltenden Behälter (11), mindestens einen Transportförderer (16) zum Transportieren jedes Behälters (11) von der Eingabestation (14) zur Ausgabestation (15) in Transportrichtung T durch die Betäubungszonen (13), sowie Mittel (17) zum Zuführen des Gasgemisches in die Betäubungszonen (13) der Betäubungskammer (12), **dadurch gekennzeichnet, dass** das Mittel (17) zum Zuführen des Gasgemisches mindestens ein Injektionsrohr (18) umfasst, das zum lösbaren Verbinden mit jedem Behälter (11) und zum Lösen von diesem relativ zum Behälter (11) bewegbar ausgebildet und eingerichtet ist, derart, dass jeder Behälter (11) im Zustand der lösbaren Verbindung mit dem oder jedem Injektionsrohr (18) mit dem Gasgemisch befüllbar ist, wobei jedes Injektionsrohr (18) zum Bewegen in das Innere jedes einen Behälterstapel bildenden Behälters (11) und zum Bewegen aus jedem Behälter (11) ausgebildet und eingerichtet ist, derart, dass jeder Behälter (11) des Behälterstapels mit den darin befindlichen Geflügeltieren individuell und von innen gerichtet mit dem aus dem oder jedem Injektionsrohr (18) strömenden Gasgemisch befüllbar ist, wobei das oder jedes Injektionsrohr (18) oberhalb der Transportstrecke angeordnet und vertikal auf und ab bewegbar ausgebildet ist, derart, dass das Injektionsrohr (18) aus einer oberen Warteposition, in der das Injektionsrohr (18) mit seinem freien Ende vollständig außerhalb des dem Injektionsrohr (18) am nächsten liegenden Behälters (11) eines unter dem Injektionsrohr (18) stehenden Behälterstapels positioniert ist, in eine untere Arbeitsposition, in der das Injektionsrohr (18) mit seinem freien Ende innerhalb eines beliebigen Behälters (11) des Behälterstapels positioniert ist, und zurück bewegbar ist.

2. Vorrichtung (10) nach Anspruch 1, **dadurch gekennzeichnet, dass** die Betäubungskammer (12) als geschlossener Betäubungstunnel (19) ausgebildet ist und eine horizontal ausgerichtete Betäubungsstrecke bildet und der oder jeder Transportförderer (16) entlang der Betäubungsstrecke zum horizontalen Transportieren des oder jedes Behälters (11) in einer Ebene E von Betäubungszone (13) zu Betäubungszone (13) ausgebildet und eingerichtet ist.

3. Vorrichtung (10) nach Anspruch 1 oder 2, **dadurch gekennzeichnet, dass** jeder der Betäubungszonen (13) mindestens ein Injektionsrohr (18) zugeordnet ist, derart, dass jede der Betäubungszonen (13) mit einem Gasgemisch, insbesondere unterschiedlicher Konzentration des Betäubungsgases, beaufschlagbar ist.

4. Vorrichtung (10) nach einem oder mehreren der Ansprüche 1 bis 3, **dadurch gekennzeichnet, dass** das oder jedes Injektionsrohr (18) an seinem freien Ende einen Adapterkopf (20) aufweist, der zum Adaptieren des Injektionsrohres (18) an dem bzw. in dem oder jedem Behälter (11) eines Behälterstapels ausgebildet und eingerichtet ist, wobei der Adapterkopf (20) mindestens eine Öffnung (21) zum Austritt des Gasgemisches aufweist.

5. Vorrichtung (10) nach Anspruch 4, **dadurch gekennzeichnet, dass** der Adapterkopf (20) als Steckverbindung ausgebildet ist, derart, dass jedes Injektionsrohr (18) mit seinem Adapterkopf (20) befestigungsmittelfrei mit jedem Behälter (11) dichtend verbindbar ist, derart, dass einerseits die oder jede Öffnung (21) zum Befüllen des oder jedes Behälters (11) mit dem Gasgemisch in den Innenraum des Behälters (11) weist und andererseits der Adapterkopf (20) gegenüber dem Behälter (11) nach außen zur Umgebung hin abgedichtet ist.

6. Vorrichtung (10) nach Anspruch 4 oder 5, **dadurch gekennzeichnet, dass** die oder jede Öffnung (21) zum Befüllen in dem Adapterkopf (20) in längsaxialer Ausrichtung des Adapterkopfes (20) zwischen zwei Dichtelementen (22, 23) des Adapterkopfes (20) angeordnet ist.

7. Vorrichtung (10) nach einem oder mehreren der Ansprüche 1 bis 6, **dadurch gekennzeichnet, dass** jedem Injektionsrohr (18) ein Mittel zum Ermitteln der Gaskonzentration des Betäubungsgases im Gasgemisch innerhalb des Behälters (11) und/oder zum optischen Überwachen des Innenraumes des Behälters (11) zugeordnet ist.

8. Vorrichtung (10) nach einem oder mehreren der Ansprüche 1 bis 7, **dadurch gekennzeichnet, dass** sie eine Steuer- und/oder Regelungseinheit umfasst, mittels der die Transportgeschwindigkeit des oder jedes Transportförderers und die Zusammensetzung des Gasgemisches bezüglich der Konzentration des Betäubungsgases im Gasgemisch steuerbar- und/oder regelbar ist.

9. Vorrichtung (10) nach einem oder mehreren der Ansprüche 1 bis 8, **dadurch gekennzeichnet, dass** jeder Betäubungszone (13) mindestens zwei Injektionsrohre (18) zugeordnet sind, die an einem gemeinsamen Versorgungsrohr (24) angeschlossen sind.

10. Vorrichtung (10) nach einem oder mehreren der Ansprüche 1 bis 9, **dadurch gekennzeichnet, dass** entlang der Transportstrecke mindestens zwei Eingabestationen (14) vorgesehen sind.

11. Vorrichtung (10) nach einem oder mehreren der Ansprüche 1 bis 10, **dadurch gekennzeichnet, dass** die oder jede Eingabestation (14) zum vertikalen und/oder horizontalen Einführen des oder jedes Behälters (11) auf die Transportstrecke ausgebildet und eingerichtet ist.

12. Vorrichtung (10) nach einem oder mehreren der Ansprüche 1 bis 11, **dadurch gekennzeichnet, dass** in Transportrichtung T hinter den Betäubungszonen (13) und vor der Ausgabestation (15) mindestens ein Saugrohr (25) zum Absaugen des Gasgemisches aus jedem Behälter (11) angeordnet ist, wobei das oder jedes Saugrohr (25) vorzugsweise baugleich zum Injektionsrohr (18) ausgebildet ist.

13. Vorrichtung (10) nach einem oder mehreren der Ansprüche 1 bis 12, **dadurch gekennzeichnet, dass** die am ausgangsseitigen Ende der Transportstrecke angeordnete Ausgabestation (15) zum vereinzelten Ausgeben der Behälter (11) nach dem Prinzip First-in-First-out (FiFo) ausgebildet und eingerichtet ist.

14. Anordnung (27) zum Betäuben von zum Schlachten vorgesehenen und in Behältern (11) befindlichen, lebenden Geflügeltieren mittels eines ein Betäubungsgas umfassenden Gasgemisches, umfassend eine Vorrichtung (10) zum Betäuben von zum Schlachten vorgesehenen und in Behältern (11) befindlichen, lebenden Geflügeltieren mittels eines ein Betäubungsgas umfassenden Gasgemisches sowie mindestens zwei Behälter (11) zum Transportieren der Geflügeltiere durch die Vorrichtung (10), **dadurch gekennzeichnet, dass** die Vorrichtung (10) zum Betäuben nach einem der Ansprüche 1 bis 13 ausgebildet ist und jeder Behälter (11) zum lösbaren Verbinden mit dem oder jedem Injektionsrohr (18) ausgebildet und eingerichtet ist.

15. Anordnung (27) nach Anspruch 14, **dadurch gekennzeichnet, dass** jeder Behälter (11) wenigstens ein Segment (28) einer Belüftungs- und Entlüftungssäule, das durch das Innenvolumen des Behälters (11) verläuft und wenigstens eine Belüftungs- und Entlüftungsöffnung (29) mit Abstand zu den Seitenwänden (30) aufweist, umfasst.

16. Anordnung (27) nach Anspruch 15, **dadurch gekennzeichnet, dass** das oder jedes Segment (28) der Belüftungs- und Entlüftungssäule zum Anschluss an korrespondierende Segmente (28) von Behältern (11) gleicher Bauart ausgebildet und eingerichtet ist.

17. Anordnung (27) nach Anspruch 15 oder 16, **dadurch gekennzeichnet, dass** mehrere der Behälter (11) einen Behälterstapel bilden, derart, dass der Behälterstapel eine aus den Segmenten (28) gebildete, durchgängige Belüftungs- und Entlüftungssäule (32) aufweist, in die das oder jedes Injektionsrohr (18) einbringbar ist.

18. Anordnung (27) nach einem oder mehreren der Ansprüche 15 bis 17, **dadurch gekennzeichnet, dass** die Segmente (28) der Belüftungs- und Entlüftungssäule und die daraus gebildete Belüftungs- und Entlüftungssäule (32) zum Aufnehmen der Injektionsrohre (18) und der den Injektionsrohren (18) zugeordneten Adapterköpfe (20) ausgebildet und eingerichtet sind.

19. Anordnung (27) nach einem oder mehreren der Ansprüche 15 bis 18, **dadurch gekennzeichnet, dass** die Segmente (28) der Belüftungs- und Entlüftungssäule ausgebildet und eingerichtet sind, die Adapterköpfe (20) form- und/oder reibschlüssig aufzunehmen.

20. Anordnung (27) nach einem oder mehreren der Ansprüche 15 bis 19, **dadurch gekennzeichnet, dass** die äußere Formgebung und Dimensionierung jedes Adapterkopfes (20) an die innere Formgebung und Dimensionierung jedes Segmentes (28) der Belüftungs- und Entlüftungssäule angepasst ist.

21. Verfahren zum Betäuben von zum Schlachten vorgesehenen und in Behältern (11) befindlichen, lebenden Geflügeltieren mittels eines ein Betäubungsgas beinhaltenden Gasgemisches, umfassend die Schritte:
- Zuführen von lebende Geflügeltiere beinhaltenden Behältern (11) mittels einer Eingabestation (14) in eine Betäubungskammer (12),
- Transportieren jedes Behälters (11) durch mindestens zwei Betäubungszonen (13) der Betäubungskammer (12) mittels mindestens eines Transportförderers (16), und
- Ausgeben jedes betäubte Geflügeltiere beinhaltenden Behälters (11) mittels einer Ausgabestation (15) aus der Betäubungskammer (12),
- wobei die in jedem Behälter (11) befindlichen Geflügeltiere in den Betäubungszonen (13) der Betäubungskammer (12) mit dem Gasgemisch beaufschlagt werden,
**dadurch gekennzeichnet, dass** das Gasgemisch mittels mindestens eines relativ zu den Behältern (11) bewegbaren Injektionsrohres (18) direkt von innen in jeden einzelnen Behälter (11) geleitet wird, wobei mehrere Behälter (11) des Behälterstapels in allen Betäubungszonen (13) nacheinander stets von oben nach unten oder stets von unten nach oben mittels des oder jedes Injektionsrohres (18) mit dem Gasgemisch befüllt und die Behälter (11) des Behälterstapels anschließend in der Reihenfolge ihrer Befüllung mit dem Gasgemisch im Bereich der Ausgabestation (15) vereinzelt ausgegeben werden.

22. Verfahren nach Anspruch 21, **dadurch gekennzeichnet, dass** das Gasgemisch durch mechanische Ventilation in jeden einzelnen Behälter (11) eines Behälterstapels eingebracht wird, so dass das Gasgemisch innerhalb der Behälter (11) von innen nach außen strömt.

23. Verfahren nach Anspruch 21 oder 22, **dadurch gekennzeichnet, dass** mindestens zwei übereinander angeordnete Behälter (11) als Behälterstapel im Bereich der Eingabestation (14) in die Betäubungskammer (12) eingegeben und die Behälter (11) des Behälterstapels im Bereich der Ausgabestation (15) vereinzelt wieder ausgegeben werden.

24. Verfahren nach einem oder mehreren der Ansprüche 21 bis 23, **dadurch gekennzeichnet, dass** die Behälter (11) des Behälterstapels hinter den Betäubungszonen (13) und vor der Ausgabestation (15) in der Reihenfolge ihrer Befüllung mit dem Gasgemisch wieder vom Gasgemisch befreit und die Behälter (11) des Behälterstapels anschließend in der Reihgenfolge ihrer Befreiung vom Gasgemisch vereinzelt ausgegeben werden.

25. Verfahren nach einem oder mehreren der Ansprüche 21 bis 24, **dadurch gekennzeichnet, dass** sämtliche Behälter (11) bzw. Behälterstapel in horizontaler Transportrichtung T nacheinander jeweils mindestens drei Betäubungszonen (13) durchlaufen, nämlich eine erste Phase I mit einer Konzentration von 5-15% Betäubungsgas im Gasgemisch, eine zweite Phase II mit einer Konzentration von 30-50% Betäubungsgas im Gasgemisch und eine dritte Phase II mit einer Konzentration von 50-100% Betäubungsgas im Gasgemisch.

26. Verfahren nach Anspruch 25, **dadurch gekennzeichnet, dass** hinter den Betäubungszonen (13) mit den Phasen I bis III mögliche Schwankungen in der Konzentration des Betäubungsgases im Gasgemisch durch Erhöhen oder Reduzieren der Konzentration des Betäubungsgases im Gasgemisch ausgeglichen werden.

27. Verfahren nach einem oder mehreren der Ansprüche 21 bis 26, **dadurch gekennzeichnet, dass** die Gaskonzentration des Betäubungsgases im Gasgemisch und/oder der Innenraum des Behälters überwacht werden.

28. Verfahren nach einem oder mehreren der Ansprüche 21 bis 27, **dadurch gekennzeichnet, dass** die Behälter (11) bzw. Behälterstapel wahlweise vertikal von oben oder horizontal von der Seite in die Betäubungskammer (12) geführt werden.

29. Verfahren nach einem oder mehreren der Ansprüche 21 bis 28, **dadurch gekennzeichnet, dass** Behälter (11) bzw. Behälterstapel in Abhängigkeit der Größe der Geflügeltiere und/oder in Abhängigkeit des anzustrebenden Betäubungsgrades der Geflügeltiere in den Behältern (11) an unterschiedlichen Positionen der Betäubungskammer (12) dieser zugeführt werden.

## Claims

1. Apparatus (10), designed and configured for stunning live poultry animals which are intended for slaughter and are located in containers (11), by means of a gas mixture comprising a stunning gas, which apparatus comprises a stunning chamber (12) having at least two stunning zones (13), an introduction station (14), arranged on the inlet side of the stunning chamber (12), for each container (11) containing live poultry animals and a discharge station (15), arranged on the outlet side of the stunning chamber (12), for each container (11) containing stunned poultry animals, at least one transport conveyor (16) for transporting each container (11) in the transport direction T through the stunning zones (13) from the introduction station (14) to the discharge station (15), as well as means (17) for delivering the gas mixture into the stunning zones (13) of the stunning chamber (12), **characterised in that** the means (17) for delivering the gas mixture comprises at least one injection pipe (18) which is designed and configured to be movable relative to the container (11) for detachable connection to each container (11) and for detachment therefrom, in such a manner that each container (11) can be filled with the gas mixture when it is in the state of detachable connection to the or each injection pipe (18), wherein each injection pipe (18) is designed and configured to move into the interior of each container (11) forming a container stack and to move out of each container (11), in such a manner that each container (11) of the container stack, with the poultry animals located therein, can be filled with the gas mixture flowing out of the or each injection pipe (18) individually and directed from the inside, wherein the or each injection pipe (18) is arranged above the transport path and is designed to be movable vertically up and down, in such a manner that the injection pipe (18) can be moved from an upper waiting position, in which the injection pipe (18) is positioned with its free end completely outside the container (11) of a container stack located beneath the injection pipe (18) that is closest to the injection pipe (18), into a lower working position, in which the injection pipe (18) is positioned with its free end inside any container (11) of the container stack, and back.

2. Apparatus (10) according to claim 1, **characterised in that** the stunning chamber (12) is in the form of a closed stunning tunnel (19) and forms a horizontally oriented stunning line, and the or each transport conveyor (16) is designed and configured along the stunning line for horizontally transporting the or each container (11) in a plane E from stunning zone (13) to stunning zone (13).

3. Apparatus (10) according to claim 1 or 2, **characterised in that** at least one injection pipe (18) is associated with each of the stunning zones (13), in such a manner that each of the stunning zones (13) can be exposed to a gas mixture, in particular having a different concentration of the stunning gas.

4. Apparatus (10) according to one or more of claims 1 to 3, **characterised in that** the or each injection pipe (18) has at its free end an adapter head (20) which is designed and configured for adapting the injection pipe (18) to the or in the or each container (11) of a container stack, wherein the adapter head (20) has at least one opening (21) for emission of the gas mixture.

5. Apparatus (10) according to claim 4, **characterised in that** the adapter head (20) is in the form of a plug-in connector, in such a manner that each injection pipe (18) can be connected in a sealed manner to each container (11) by means of its adapter head (20) without a fixing means, in such a manner that, on the one hand, the or each opening (21) for filling the or each container (11) with the gas mixture points into the interior of the container (11) and, on the other hand, the adapter head (20) is sealed outwardly relative to the container (11) with respect to the surroundings.

6. Apparatus (10) according to claim 4 or 5, **characterised in that** the or each opening (21) for filling is arranged in the adapter head (20) in the longitudinal-axis orientation of the adapter head (20) between two sealing elements (22, 23) of the adapter head (20).

7. Apparatus (10) according to one or more of claims 1 to 6, **characterised in that** each injection pipe (18) has an associated means for determining the gas concentration of the stunning gas in the gas mixture inside the container (11) and/or for visually monitoring the interior of the container (11).

8. Apparatus (10) according to one or more of claims 1 to 7, **characterised in that** it comprises a control and/or regulating unit by means of which the transport speed of the or each transport conveyor and the composition of the gas mixture in terms of the concentration of stunning gas in the gas mixture can be controlled and/or regulated.

9. Apparatus (10) according to one or more of claims 1 to 8, **characterised in that** at least two injection pipes (18) are associated with each stunning zone (13), which injection pipes are connected to a common supply pipe (24).

10. Apparatus (10) according to one or more of claims 1 to 9, **characterised in that** at least two introduction stations (14) are provided along the transport path.

11. Apparatus (10) according to one or more of claims 1 to 10, **characterised in that** the or each introduction station (14) is designed and configured to introduce the or each container (11) onto the transport path vertically and/or horizontally.

12. Apparatus (10) according to one or more of claims 1 to 11, **characterised in that** at least one suction pipe (25) for drawing off the gas mixture from each container (11) is arranged downstream of the stunning zones (13) and upstream of the discharge station (15) in the transport direction T, wherein the or each suction pipe (25) is preferably of the same construction as the injection pipe (18).

13. Apparatus (10) according to one or more of claims 1 to 12, **characterised in that** the discharge station (15) arranged at the outlet-side end of the transport path is designed and configured to discharge the containers (11) singly according to the first-in-first-out (FiFo) principle.

14. Arrangement (27) for stunning live poultry animals which are intended for slaughter and are located in containers (11), by means of a gas mixture comprising a stunning gas, which arrangement comprises an apparatus (10) for stunning live poultry animals which are intended for slaughter and are located in containers (11), by means of a gas mixture comprising a stunning gas, and at least two containers (11) for transporting the poultry animals through the apparatus (10), **characterised in that** the apparatus (10) for stunning is configured according to any one of claims 1 to 13 and each container (11) is designed and configured for detachable connection to the or each injection pipe (18).

15. Arrangement (27) according to claim 14, **characterised in that** each container (11) comprises at least one segment (28) of a ventilation and air outflow column which extends through the inner volume of the container (11) and has at least one ventilation and air outflow opening (29) at a distance from the side walls (30).

16. Arrangement (27) according to claim 15, **characterised in that** the or each segment (28) of the ventilation and air outflow column is designed and configured for connection to corresponding segments (28) of containers (11) of the same construction.

17. Arrangement (27) according to claim 15 or 16, **characterised in that** a plurality of containers (11) form a container stack, in such a manner that the container stack has a continuous ventilation and air outflow column which is formed by the segments (28) and into which the or each injection pipe (18) can be introduced.

18. Arrangement (27) according to one or more of claims 15 to 17, **characterised in that** the segments (28) of the ventilation and air outflow column, and the ventilation and air outflow column (32) formed therefrom, are designed and configured to receive the injection pipes (18) and the adapter heads (20) associated with the injection pipes (18).

19. Arrangement (27) according to one or more of claims 15 to 18, **characterised in that** the segments (28) of the ventilation and air outflow column are designed and configured to receive the adapter heads (20) by interlocking and/or frictional engagement.

20. Arrangement (27) according to one or more of claims 15 to 19, **characterised in that** the outer shape and size of each adapter head (20) is matched to the inner shape and size of each segment (28) of the ventilation and air outflow column.

21. Method for stunning live poultry animals which are intended for slaughter and are located in containers (11), by means of a gas mixture comprising a stunning gas, which method comprises the steps:
- delivering containers (11) containing live poultry animals to a stunning chamber (12) by means of an introduction station (14),
- transporting each container (11) through at least two stunning zones (13) of the stunning chamber (12) by means of at least one transport conveyor (16), and
- discharging each container (11) containing stunned poultry animals from the stunning chamber (12) by means of a discharge station (15),
- wherein the poultry animals located in each container (11) are exposed to the gas mixture in the stunning zones (13) of the stunning chamber (12),
**characterised in that** the gas mixture is guided directly from the inside into each individual container (11) by means of at least one injection pipe (18) which is movable relative to the containers (11), wherein a plurality of containers (11) of the container stack are filled with the gas mixture in all the stunning zones (13) in succession by means of the or each injection pipe (18) always from top to bottom or always from bottom to top, and the containers (11) of the container stack are then discharged singly in the region of the discharge station (15) in the order in which they were filled with the gas mixture.

22. Method according to claim 21, **characterised in that** the gas mixture is introduced into each individual container (11) of a container stack by mechanical ventilation, so that the gas mixture inside the containers (11) flows from the inside outwards.

23. Method according to claim 21 or 22, **characterised in that** at least two containers (11) arranged one above the other as a container stack are introduced into the stunning chamber (12) in the region of the introduction station (14), and the containers (11) of the container stack are discharged again singly in the region of the discharge station (15).

24. Method according to one or more of claims 21 to 23, **characterised in that** the containers (11) of the container stack are freed of the gas mixture again downstream of the stunning zones (13) and upstream of the discharge station (15) in the order in which they were filled with the gas mixture, and the containers (11) of the container stack are then discharged singly in the order in which they were freed of the gas mixture.

25. Method according to one or more of claims 21 to 24, **characterised in that** all the containers (11) or container stacks pass in succession in the horizontal transport direction T through at least three stunning zones (13), namely a first phase I with a concentration of from 5 to 15% stunning gas in the gas mixture, a second phase II with a concentration of from 30 to 50% stunning gas in the gas mixture, and a third phase III with a concentration of from 50 to 100% stunning gas in the gas mixture.

26. Method according to claim 25, **characterised in that**, downstream of the stunning zones (13) with phases I to III, possible fluctuations in the concentration of stunning gas in the gas mixture are compensated for by increasing or reducing the concentration of stunning gas in the gas mixture.

27. Method according to one or more of claims 21 to 26, **characterised in that** the gas concentration of the stunning gas in the gas mixture and/or the interior of the container are monitored.

28. Method according to one or more of claims 21 to 27, **characterised in that** the containers (11) or container stacks are guided into the stunning chamber (12) either vertically from above or horizontally from the side.

29. Method according to one or more of claims 21 to 28, **characterised in that** containers (11) or container stacks are delivered to the stunning chamber (12) at different positions of the stunning chamber in dependence on the size of the poultry animals and/or in dependence on the desired degree of stunning of the poultry animals in the containers (11).

## Revendications

1. Dispositif (10), configuré et adapté pour l'étourdissement de volailles vivantes, destinées à l'abattage et se trouvant dans des conteneurs (11), au moyen d'un mélange gazeux contenant un gaz étourdissant, comportant une chambre d'étourdissement (12) pourvue d'au moins deux zones d'étourdissement (13), une station d'introduction (14) agencée à l'entrée de la chambre d'étourdissement (12) pour chaque conteneur (11) contenant des volailles vivantes et une station de déchargement (15) agencée à la sortie de la chambre d'étourdissement (12) pour chaque conteneur (11) contenant des volailles étourdies, au moins un transporteur (16) pour le transport de chaque conteneur (11) de la station d'introduction (14) à la station de déchargement (15) dans la direction de transport T à travers les zones d'étourdissement (13), ainsi qu'un moyen (17) destiné à acheminer le mélange gazeux dans les zones d'étourdissement (13) de la chambre d'étourdissement (12), **caractérisé en ce que** le moyen (17) destiné à acheminer le mélange gazeux comporte au moins un tube d'injection (18), qui est configuré et adapté pour être mobile par rapport au conteneur (11) afin d'être relié de manière amovible à chaque conteneur (11) et d'en être détaché, de sorte que chaque conteneur (11) peut être rempli avec le mélange gazeux lorsque la liaison amovible avec le ou chaque tube d'injection (18) est établie, chaque tube d'injection (18) étant configuré et adapté pour se déplacer à l'intérieur de chaque conteneur (11) formant une pile de conteneurs et pour se déplacer hors de chaque conteneur (11), de sorte que chaque conteneur (11) de la pile de conteneurs dans lequel se trouvent des volailles peut être rempli individuellement et de manière dirigée vers l'intérieur avec le mélange gazeux s'écoulant hors du ou de chaque tube d'injection (18), le ou chaque tube d'injection (18) étant agencé au-dessus de la section de transport et étant configuré pour pouvoir être déplacé verticalement vers le haut et vers le bas, de sorte que le tube d'injection (18) peut être déplacé à partir d'une position d'attente supérieure, dans laquelle le tube d'injection (18) est positionné avec son extrémité libre entièrement à l'extérieur du conteneur (11), situé le plus près du tube d'injection (18), d'une pile de conteneurs située sous le tube d'injection (18), dans une position de travail inférieure, dans laquelle le tube d'injection (18) est positionné avec son extrémité libre à l'intérieur d'un conteneur quelconque (11) de la pile de conteneurs, et en retour.

2. Dispositif (10) selon la revendication 1, **caractérisé en ce que** la chambre d'étourdissement (12) est configurée sous la forme d'un tunnel d'étourdissement fermé (19) et forme une section d'étourdissement dirigée horizontalement et le ou chaque transporteur (16) est configuré et adapté le long de la section d'étourdissement pour le transport horizontal du ou de chaque conteneur (11) dans un plan E de zone d'étourdissement (13) en zone d'étourdissement (13).

3. Dispositif (10) selon la revendication 1 ou 2, **caractérisé en ce qu'**au moins un tube d'injection (18) est associé à chacune des zones d'étourdissement (13), de sorte que chacune des zones d'étourdissement (13) peut être chargée avec un mélange gazeux, notamment une concentration différente du gaz étourdissant.

4. Dispositif (10) selon une ou plusieurs des revendications 1 à 3, **caractérisé en ce que** le ou chaque tube d'injection (18) comprend, à son extrémité libre, une tête adaptatrice (20), qui est configurée et adaptée pour l'adaptation du tube d'injection (18) sur le ou dans le ou chaque conteneur (11) d'une pile de conteneurs, la tête adaptatrice (20) comprenant au moins une ouverture (21) pour la sortie du mélange gazeux.

5. Dispositif (10) selon la revendication 4, **caractérisé en ce que** la tête adaptatrice (20) est configurée sous la forme d'une connexion enfichable, de sorte que chaque tube d'injection (18) peut être relié de manière étanche à chaque conteneur (11) avec sa tête adaptatrice (20) sans moyen de fixation, de sorte que d'une part la ou chaque ouverture (21) pour le remplissage du ou de chaque conteneur (11) avec le mélange gazeux est orientée vers l'espace intérieur du conteneur (11) et d'autre part la tête adaptatrice (20) est étanchéifiée vis-à-vis du conteneur (11) vers l'environnement extérieur.

6. Dispositif (10) selon la revendication 4 ou 5, **caractérisé en ce que** la ou chaque ouverture (21) pour le remplissage est agencée dans la tête adaptatrice (20) dans la direction axiale longitudinale de la tête adaptatrice (20) entre deux éléments d'étanchéité (22, 23) de la tête adaptatrice (20).

7. Dispositif (10) selon une ou plusieurs des revendications 1 à 6, **caractérisé en ce qu'**un moyen pour la détermination de la concentration en gaz du gaz étourdissant dans le mélange gazeux à l'intérieur du conteneur (11) et/ou pour la surveillance optique de l'espace intérieur du conteneur (11) est associé à chaque tube d'injection (18).

8. Dispositif (10) selon une ou plusieurs des revendications 1 à 7, **caractérisé en ce qu'**il comporte une unité de commande et/ou de régulation, au moyen de laquelle la vitesse de transport du ou de chaque transporteur et la composition du mélange gazeux au regard de la concentration du gaz étourdissant dans le mélange gazeux peuvent être commandées et/ou régulées.

9. Dispositif (10) selon une ou plusieurs des revendications 1 à 8, **caractérisé en ce qu'**au moins deux tubes d'injection (18) sont associés à chaque zone d'étourdissement (13), qui sont raccordés à un tube d'alimentation commun (24).

10. Dispositif (10) selon une ou plusieurs des revendications 1 à 9, **caractérisé en ce qu'**au moins deux stations d'introduction (14) sont prévues le long de la section de transport.

11. Dispositif (10) selon une ou plusieurs des revendications 1 à 10, **caractérisé en ce que** la ou chaque station d'introduction (14) est configurée et adaptée pour l'insertion verticale et/ou horizontale du ou de chaque conteneur (11) sur la section de transport.

12. Dispositif (10) selon une ou plusieurs des revendications 1 à 11, **caractérisé en ce qu'**au moins un tube d'aspiration (25) pour l'aspiration du mélange gazeux à partir de chaque conteneur (11) est agencé dans la direction de transport T après les zones d'étourdissement (13) et avant la station de déchargement (15), le ou chaque tube d'aspiration (25) étant de préférence configuré avec une construction identique au tube d'injection (18).

13. Dispositif (10) selon une ou plusieurs des revendications 1 à 12, **caractérisé en ce que** la station de déchargement (15) agencée à l'extrémité de sortie de la section de transport est configurée et adaptée pour le déchargement individualisé des conteneurs (11) selon le principe First-in-First-out (FiFo).

14. Agencement (27) pour l'étourdissement de volailles vivantes, destinées à l'abattage et se trouvant dans des conteneurs (11), au moyen d'un mélange gazeux comportant un gaz étourdissant, comportant un dispositif (10) pour l'étourdissement de volailles vivantes, destinées à l'abattage et se trouvant dans des conteneurs (11), au moyen d'un mélange gazeux comportant un gaz étourdissant, ainsi qu'au moins deux conteneurs (11) pour le transport des volailles à travers le dispositif (10), **caractérisé en ce que** le dispositif (10) pour l'étourdissement est configuré selon l'une quelconque des revendications 1 à 13, et chaque conteneur (11) est configuré et adapté afin d'être relié de manière amovible au ou à chaque tube d'injection (18).

15. Agencement (27) selon la revendication 14, **caractérisé en ce que** chaque conteneur (11) comporte au moins un segment (28) d'une colonne de prise d'air et de renvoi d'air, qui s'étend à travers le volume intérieur du conteneur (11) et comprend au moins une ouverture de prise d'air et de renvoi d'air (29) à distance des parois latérales (30).

16. Agencement (27) selon la revendication 15, **caractérisé en ce que** le ou chaque segment (28) de la colonne de prise d'air et de renvoi d'air est configuré et adapté pour être raccordé à des segments correspondants (28) de conteneurs (11) de même construction.

17. Agencement (27) selon la revendication 15 ou 16, **caractérisé en ce que** plusieurs des conteneurs (11) forment une pile de conteneurs, de sorte que la pile de conteneurs comprend une colonne de prise d'air et de renvoi d'air continue (32), formée par les segments (28), dans laquelle le ou chaque tube d'injection (18) peut être disposé.

18. Agencement (27) selon une ou plusieurs des revendications 15 à 17, **caractérisé en ce que** les segments (28) de la colonne de prise d'air et de renvoi d'air et la colonne de prise d'air et de renvoi d'air (32) formée à partir de ceux-ci sont configurés et adaptés pour recevoir les tubes d'injection (18) et les têtes adaptatrices (20) associées aux tubes d'injection (18).

19. Agencement (27) selon une ou plusieurs des revendications 15 à 18, **caractérisé en ce que** les segments (28) de la colonne de prise d'air et de renvoi d'air sont configurés et adaptés pour recevoir les têtes adaptatrices (20) par complémentarité de forme et/ou par friction.

20. Agencement (27) selon une ou plusieurs des revendications 15 à 19, **caractérisé en ce que** la forme et la dimension extérieure de chaque tête adaptatrice (20) sont ajustées à la forme et à la dimension intérieure de chaque segment (28) de la colonne de prise d'air et de renvoi d'air.

21. Procédé pour l'étourdissement de volailles vivantes, destinées à l'abattage et se trouvant dans des conteneurs (11), au moyen d'un mélange gazeux contenant un gaz étourdissant, comportant les étapes suivantes :
- l'acheminement de conteneurs (11) contenant des volailles vivantes au moyen d'une station d'introduction (14) dans une chambre d'étourdissement (12),
- le transport de chaque conteneur (11) à travers au moins deux zones d'étourdissement (13) de la chambre d'étourdissement (12) au moyen d'au moins un transporteur (16), et
- le déchargement de chaque conteneur (11) contenant des volailles étourdies au moyen d'une station de déchargement (15) hors de la chambre d'étourdissement (12),
- les volailles se trouvant dans chaque conteneur (11) étant soumises au mélange gazeux dans les zones d'étourdissement (13) de la chambre d'étourdissement (12),
**caractérisé en ce que** le mélange gazeux est conduit dans chaque conteneur individuel (11) directement à partir de l'intérieur au moyen d'au moins un tube d'injection (18) déplaçable par rapport aux conteneurs (11), plusieurs conteneurs (11) de la pile de conteneurs étant successivement remplis avec le mélange gazeux dans toutes les zones d'étourdissement (13) toujours du haut vers le bas ou toujours du bas vers le haut au moyen du ou de chaque tube d'injection (18), et les conteneurs (11) de la pile de conteneurs étant ensuite déchargés de manière individualisée dans la région de la station de déchargement (15) dans l'ordre de leur remplissage avec le mélange gazeux.

22. Procédé selon la revendication 21, **caractérisé en ce que** le mélange gazeux est introduit par ventilation mécanique dans chaque conteneur individuel (11) d'une pile de conteneurs, de sorte que le mélange gazeux s'écoule de l'intérieur vers l'extérieur dans le conteneur (11).

23. Procédé selon la revendication 21 ou 22, **caractérisé en ce qu'**au moins deux conteneurs (11) agencés l'un au-dessus de l'autre sont introduits en tant que pile de conteneurs dans la région de la station d'introduction (14) dans la chambre d'étourdissement (12) et les conteneurs (11) de la pile de conteneurs sont déchargés de manière individualisée dans la région de la station de déchargement (15).

24. Procédé selon une ou plusieurs des revendications 21 à 23, **caractérisé en ce que** les conteneurs (11) de la pile de conteneurs sont débarrassés du mélange gazeux après les zones d'étourdissement (13) et avant la station de déchargement (15) dans l'ordre de leur remplissage avec le mélange gazeux, et les conteneurs (11) de la pile de conteneurs sont ensuite déchargés de manière individualisée dans l'ordre où ils ont été débarrassés du mélange gazeux.

25. Procédé selon une ou plusieurs des revendications 21 à 24, **caractérisé en ce que** tous les conteneurs (11) ou piles de conteneurs traversent dans la direction de transport horizontale T successivement à chaque fois au moins trois zones d'étourdissement (13), à savoir une première phase I ayant une concentration de 5 à 15 % de gaz étourdissant dans le mélange gazeux, une deuxième phase II ayant une concentration de 30 à 50 % de gaz étourdissant dans le mélange gazeux et une troisième phase III ayant une concentration de 50 à 100 % de gaz étourdissant dans le mélange gazeux.

26. Procédé selon la revendication 25, **caractérisé en ce qu'**après les zones d'étourdissement (13) comprenant les phases I à III, des fluctuations possibles de la concentration du gaz étourdissant dans le mélange gazeux sont compensées par augmentation ou réduction de la concentration du gaz étourdissant dans le mélange gazeux.

27. Procédé selon une ou plusieurs des revendications 21 à 26, **caractérisé en ce que** la concentration en gaz du gaz étourdissant dans le mélange gazeux et/ou dans l'espace intérieur du conteneur est surveillée.

28. Procédé selon une ou plusieurs des revendications 21 à 27, **caractérisé en ce que** les conteneurs (11) ou piles de conteneurs sont acheminés au choix verticalement par le haut ou horizontalement par le côté dans la chambre d'étourdissement (12).

29. Procédé selon une ou plusieurs des revendications 21 à 28, **caractérisé en ce que** les conteneurs (11) ou piles de conteneurs sont introduits dans la chambre d'étourdissement (12) à différentes positions de celle-ci en fonction de la taille des volailles et/ou en fonction du degré d'étourdissement visé des volailles dans les conteneurs (11).
